# EUROPÄISCHE PATENTSCHRIFT

(11) **EP 3 116 683 B1**
(45) Veröffentlichungstag und Bekanntmachung des Hinweises auf die Patenterteilung: **01.01.2020**
(21) Anmeldenummer: 15709511.8
(22) Anmeldetag: 13.03.2015
(51) Int. Cl.: G05B 19/27, B24B 5/42, B24B 49/02, B24B 49/04

(54) **VERFAHREN UND VORRICHTUNG ZUM SCHLEIFEN VON GROSSKURBELWELLEN**
METHOD AND DEVICE FOR FINISHING LARGE CRANKSHAFTS
PROCÉDÉ ET DISPOSITIF DE FINITION DE GRANDS VILEBREQUINS

(30) Priorität: 14.03.2014 DE 102014204807
(43) Veröffentlichungstag der Anmeldung: 18.01.2017
(73) Patentinhaber: Erwin Junker Grinding Technology a.s., 27601 Mélník (CZ)
(72) Erfinder: JUNKER, Erwin, 77815 Bühl/Baden (DE)
(74) Vertreter: Leske, Thomas
(86) Internationale Anmeldenummer: PCT/EP2015/055315
(87) Internationale Veröffentlichungsnummer: WO 2015/136081

(56) Entgegenhaltungen:
- EP-A2- 1 193 028
- EP-A2- 2 570 229
- WO-A1-2004/012903
- WO-A1-2011/085913
- WO-A1-2012/126840
- DE-A1- 19 919 893
- DE-A1-102009 051 586
- DE-C1- 19 650 155
- GB-A- 2 445 025
- Fives Landis: "Landis LT3e", , 31. Dezember 2012 (2012-12-31), XP002740234, Gefunden im Internet: URL:http://www.cinetic-landis.co.uk/de/lt3 .php [gefunden am 2015-05-28]
- BRYCHTA Z: "KOMPLETT IN EINER AUFSPANNUNG SCHLEIFEN", WERKSTATT UND BETRIEB, CARL HANSER VERLAG GMBH & CO. KG, DE, Bd. 132, Nr. 5, 1. Mai 1999 (1999-05-01), Seiten 101-103, XP000824367, ISSN: 0043-2792

## Beschreibung

Die Erfindung betrifft ein Verfahren und eine Vorrichtung zur Schleifbearbeitung von Großkurbelwellen von LKW-, Schiffs- oder Stationärmotoren gemäss dem Oberbegriff der Ansprüche 1 und 13, wie zum Beispiel aus der DE 199 19 893 A1 und dem Internet Ausdruck der Firma Cinetic Landis "Landis LT3e", 31. Dezember 2012 jeweils bekannt.

Großkurbelwellen sollen im Rahmen dieser Erfindung Kurbelwellen sein, welche eine Länge von > 800 mm, insbesondere 1000 bis ca. 4000 mm aufweisen. Derartige Großkurbelwellen werden - anders als im Falle von PKW-Kurbelwellen - nicht in einer gleichgroßen Stückzahl hergestellt. Je größer die Kurbelwellenabmessungen sind, umso geringer werden die Losgrößen, in denen die Kurbelwellen hergestellt werden.

Schleifmaschinen, welche zur Bearbeitung von Kurbelwellen beispielsweise mit einer Länge von ca. 1500 mm vorgesehen sind, werden im Allgemeinen mittels Ladehilfen manuell be- bzw. entladen. Wegen der geringen Stückzahlen von Kurbelwellen dieser Größenordnung und der Tatsache, dass für derartige Großkurbelwellen Schleifaufmaße von bis zu 2 mm im Durchmesser und auf den Planseiten pro Seite von bis zu 0,5 mm abgeschliffen werden müssen und daher bereits die Rohteile, welche auf die Schleifmaschine gelangen, sehr kostenintensiv sind, kommt es zwar auch für diese Großkurbelwellen darauf an, dass die Schleifzeiten möglichst gering sind, es ist aber von besonderer Bedeutung, dass die Kurbelwellen-Rohteile als Gutteile geschliffen werden. Das bedeutet, Ausschussteile müssen unter allen Umständen wegen des hohen finanziellen Verlustes vermieden werden. Es werden eher erhöhte Schleifzeiten in Kauf genommen, als dass ein schlechtes Schleifergebnis die Kurbelwelle als ein Ausschussteil qualifiziert. Dabei ist zu beachten, dass beim Schleifen von Großkurbelwellen das - auch wegen der Vorbehandlung einer Weichbearbeitung und eines anschließenden Härtens der Lagerstellen erforderliche - höhere Schleifaufmaß ein hohes Zerspanvolumen erfordert, was seinerseits die Gefahr beinhaltet, dass sich die Kurbelwelle während des Schleifens verzieht. Dieser Effekt bzw. dieser Nachteil tritt umso stärker auf, wenn die Planseiten der Lagerstellen mitgeschliffen werden müssen. Vor allen Dingen die bei den Großkurbelwellen zwischen den Lagerstellen und den mitzuschleifenden Planseiten vorhandenen Übergangsradien verstärken dieses Problem weiter. Nach dem Härten der einzelnen Lagerstellen erstreckt sich die Härtezone üblicherweise bis in den Radiusübergang hinein oder gegebenenfalls sogar bis in die angrenzende Planschulter hinein. Beim Schleifen von Großkurbelwellen ist daher mit einem wesentlich stärkeren Verzug als bei kleineren Kurbelwellen, beispielsweise PKW-Kurbelwellen, zu rechnen. Es ist generell nicht möglich, die Schleifabläufe und Schleifbedingungen, welche für kleinere Kurbelwellen erfolgreich sind, um derartige Kurbelwellen mit hoher Genauigkeit herzustellen, ohne weiteres auf Großkurbelwellen zu übertragen. Großkurbelwellen werden üblicherweise auf großen Schleifmaschinen in mehreren Prozessschritten hergestellt, wobei hauptsächlich mit Korund-Schleifscheiben geschliffen wird.

In DE 43 27807 C2 sind ein Verfahren und eine Schleifmaschine zum Schleifen einer Kurbelwelle beschrieben, ohne dass speziell auf Großkurbelwellen abgestellt worden ist. Die Kurbelwelle wird bei dem bekannten Verfahren mit axialem Zug eingespannt und von mindestens zwei konturierten, jeweils separat gelagerten Schleifscheiben geschliffen. Die in einem Werkstückstock und einem Reitstock aufgespannte Kurbelwelle wird durch den Antrieb im Werkstückstock in Rotation versetzt. Die Genauigkeit der geschliffenen Kurbelwelle soll dadurch erreicht werden, dass das gesamte Fertigschleifen der Kurbelwelle, aber nur das Fertigschleifen, in einer einzigen Aufspannung realisiert wird. Hinweise auf den Einsatz von Lünetten sind nicht vorhanden.

In DE 199 19893 A1 ist das Vor- und Fertigschleifen einer Kurbelwelle in einer Aufspannung beschrieben. Insbesondere wird auf größere Kurbelwellen beispielsweise auch für LKW-Motoren mit einer Länger von über 300 mm hingewiesen. Wegen der längeren Kurbelwellen wird auch zumindest an einem Hauptlager ein Lünettensitz vorgesehen. Als Schleifscheiben können CBN-Schleifscheiben wie auch Korund-Schleifscheiben eingesetzt werden, wobei darauf verwiesen wird, dass die Standzeit einer Schleifscheibe bei Einsatz von CBN-Schleifscheiben höher ist, und es können auch höhere Genauigkeiten erreicht werden. Sowohl der Werkstückspindelstock als auch der Reitstock können einen eigenen Antrieb aufweisen, welche synchron zueinander laufen. Des Weiteren ist darauf hingewiesen, dass in einer einzigen Aufspannung zumindest die Hauptlager der Kurbelwelle vorschleifbar und danach deren Hublager und anschließend deren Hauptlager mit der zumindest einen Schleifscheibe fertigschleifbar sind. Wenn die Lagerfläche eine ballige Form aufweisen soll, so ist dies über eine entsprechende Abrichtung der eingesetzten Schleifscheibe möglich, und zwar ohne dass ein Umspannen notwendig ist. Das Schleifen der zylindrischen Endabschnitte sowie der Flansche der Kurbelwelle ist nicht beschrieben, zumal mit dem beschriebenen Verfahren die Spannbacken eines Spannfutters am zylindrischen Zapfendende der Kurbelwelle angreifen.

Der Internetausdruck der Firma Cinetic Landis beschreibt eine große CNC-Hublagerschleifmaschine mit der Bezeichnung LT3. Diese Maschine ist bis zu einer Größe von 8 m beschrieben. Mit ihr werden Hublager und Hauptlager unter Nutzung einer In-Prozess-Messung geschliffen. Um insbesondere Radien im Übergang von den eigentlichen Lagerflächen zu den Planflächen an den die Lager begrenzenden Wangen schleifen zu können, ist ein CNC-Schleifscheibenabrichter vorhanden. Die bekannte Maschine schleift die Hauptlager und die Hublager in einer Aufspannung und ist darüber hinaus in der Lage, die zylindrischen Endbereiche einschließlich Fasen oder konische Abschnitte zu schleifen. Ebenso ist auf servogesteuerte Lünetten hingewiesen.

Des Weiteren ist in dem Firmenprospekt der Firma Ingersoll Naxos bezüglich der Maschinendaten der CBN-Hublagerschleifmaschine PQ500x1250 zum einen auf eine Werkstücklänge für eine zu schleifende Kurbelwelle von 1500 mm sowie zum anderen auf den Einsatz von CBN-Schleifscheiben hingewiesen. Die Maschine ist mit einer In-Prozess-Durchmesser-Messeinrichtung gekoppelt.

Beim weitverbreiteten Einsatz von Korund-Schleifscheiben für Großkurbelwellen ist es vor allen Dingen beim Schleifen der Radien im Übergang von der eigentlichen Lagerstelle zu den Planseiten der Wangen an einer Lagerstelle sowie auch beim Schleifen der Wangen erforderlich, dass die die Radien schleifende Schleifscheibe vorher abgerichtet werden muss. Wenn die Schleifscheiben anschließend für das Schleifen beispielsweise der Lagerstelle oder der zylindrischen Endabschnitte der Kurbelwelle verwendet werden muss, muss sie erneut abgerichtet werden. Überhaupt muss zwischen den einzelnen unterschiedlichen Arbeitsgängen eine Korund-Schleifscheibe häufig abgerichtet werden. Da die Kosten für Korund-Schleifscheiben relativ niedrig sind, nimmt man das in Kauf. Das häufige Abrichten zwischen den einzelnen Arbeitsschritten erfordert auch eine insgesamt längere Herstellungszeit für eine Großkurbelwelle, was durchaus auch in Kauf genommen wird, wenn damit jedenfalls vermieden werden kann, dass eine Großkurbelwelle als Ausschussteil entsteht.

Die im Stand der Technik bekannten In-Prozess-Messeinrichtungen sind dafür vorgesehen, einen aktuellen Durchmesser an einer Lagerstelle zu messen, um so während des Schleifens Einfluss zu nehmen, dass ein Solldurchmesser erreicht bzw. eingehalten wird.

Demgegenüber besteht die Aufgabe der Erfindung darin, ein Verfahren und eine Schleifmaschine zu schaffen, mit denen Großkurbelwellen von LKW-, Schiffs- oder Stationärmotoren mit großer Genauigkeit und hoher Wirtschaftlichkeit geschliffen werden können, mit denen Schleifscheiben hoher Standzeit eingesetzt und die Anzahl der Abrichtvorgänge reduziert werden können.

Diese Aufgabe wird durch ein Verfahren mit den Merkmalen gemäß Anspruch 1 sowie durch eine Schleifmaschine mit den Merkmalen gemäß Anspruch 13 gelöst. Zweckmäßige Weiterbildungen sind in den jeweiligen abhängigen Ansprüchen beschrieben.

Gemäß einem ersten Aspekt der Erfindung werden bei dem erfindungsgemäßen Verfahren zum Komplettschleifen von Großkurbelwellen zumindest alle Haupt- und Hublager der Kurbelwelle mit zumindest einer ersten CBN-Schleifscheibe vor- und fertiggeschliffen. Außerdem werden zumindest alle zylindrischen Endbereiche und Flansche der Kurbelwelle ebenfalls in der einzigen Aufspannung der Kurbelwelle vor- und fertiggeschliffen. Der Einsatz einer CBN-Schleifscheibe ermöglicht eine hohe Standzeit und das Schleifen mit hoher Genauigkeit, ohne dass nach jedem Schleifvorgang eines bestimmten Arbeitsganges die Schleifscheibe abgerichtet werden muss. Beim Vorschleifen der Kurbelwelle werden Lünettensitze, in der Regel mehrere, geschliffen, und es wird jeweils eine Lünette an die geschliffenen Lünettensitze angestellt. Die Anzahl der verwendeten Lünetten richtet sich nach der Größe und der Länge der zu schleifenden Kurbelwelle. Bei kürzeren Kurbelwellen sind unter Umständen zwei Lünetten ausreichend, weshalb auch nur zwei Lünettensitze geschliffen werden müssen. Bei größeren und längeren Kurbelwellen ist es durchaus nötig und üblich, an jedem Hauptlager einen Lünettensitz zu schleifen und eine entsprechende Lünette anzustellen.

Je mehr Lünetten verwendet werden und je länger die Kurbelwelle ist, umso größer kann das Problem der Torsion der Kurbelwelle während ihrer Rotation sein, welche durch einen Antrieb vom Werkstückspindelstock erfolgt. Ein derartiger Rotationsantrieb wird mit C1 bezeichnet. Zur Vermeidung der Torsion ist erfindungsgemäß an einem zum Werkstückspindelstock gegenüberliegenden Ende angeordneten zweiten Werkstückspindelstock ebenfalls ein Rotationsantrieb C2 vorgesehen. Beide Antriebe C1 und C2 sind elektrisch synchron zueinander arbeitend. Erfindungsgemäß ist die erste Schleifscheibe mit jeweils CNC-gesteuerten X1-, Z1- und WK1-Achsen angetrieben. Die erste Schleifscheibe weist eine Breite auf, welche geringer ist als die axiale Länge der Haupt- und Hublager der Kurbelwelle. Die gewünschte Form der Mantelfläche der Hub- und/oder Hauptlager wird durch interpolierendes Bewegen der ersten Schleifscheibe um ihre X1-, Z1- und/oder WK1-Achse erzeugt. Unter Mantelfläche soll hier im Rahmen der Erfindung die Mantelfläche des eigentlichen Lagers der Kurbelwelle wie auch des Übergangs von der Mantelfläche mittels eines definierten Radiusses in die senkrecht zur Längsachse der Lagerstelle angeordnete Planfläche an den eine Lagerstelle begrenzenden Wangen verstanden werden. Die X1-Achse stellt dabei die Zustellung der Schleifscheibe senkrecht zur Längsachse der Lagerstelle im Sinne eines Vorschubs dar. Die Z1-Achse stellt die Bewegungsachse der Schleifscheibe mit ihrer Achse parallel zur Längsachse der Lagerstelle dar. Und die WK1-Achse stellt eine Schwenkachse dar, mittels welcher die Schleifscheibe in einem veränderlichen Winkel zu ihrer Längsachse bewegt wird. Das heißt, die WK1-Achse stellt eine Schwenkachse dar, welche durch die Schleifscheibe und den Eingriffspunkt der Schleifscheibe am zu schleifenden Werkstück senkrecht zur Längsachse der Kurbelwelle verläuft. Eine exakte, hochqualitative zylindrische Form einer Lagerstelle ist nur zu erzielen, wenn die ansonsten an ihrem Umfang in der Schleifeingriffslinie eben ausgebildete Schleifscheibe um eben diese WK1-Achse geschwenkt werden kann.

Erfindungsgemäß ist nun weiter vorgesehen, dass mittels einer Messvorrichtung mindestens zwei, vorzugsweise mehrere, aktuelle Durchmesser während des Schleifens der Haupt- und/oder Hublager oder bei unterbrochenem Schleifen derselben gemessen werden, und zwar an längs der axialen Länge dieser Lager beabstandeten Messorten; auf Basis dieser Messergebnisse werden die X1-, Z1- und WK1-Achsen der ersten CBN-Schleifscheibe zur Erzielung einer gewünschten Sollkontur der Mantelfläche der Haupt- und/oder der Hublager der Kurbelwelle interpolierend zu- und abhängig voneinander gesteuert. Unter unterbrochenem Schleifen wird hier verstanden, dass die Schleifscheibe nicht im Eingriff ist.

Prinzipiell kann die Großkurbelwelle mit einer einzigen Schleifscheibe, welche an einem einzigen Schleifspindelstock gelagert ist, geschliffen werden. Diese Schleifscheibe muss nur schmal genug sein, um nicht nur die Haupt- und die Hublager der Kurbelwelle, sondern auch die zylindrischen Endabschnitte und auch die Flansche und Planseiten an den Lagern sowie die Radien im Übergang von den eigentlichen Lagerflächen zu den Planseiten der Lager schleifen zu können. Aus Wirtschaftlichkeitsgründen ist es durchaus von Vorteil, wenn zwei Schleifspindelstöcke vorhanden sind und an jedem Schleifspindelstock eine entsprechende Schleifscheibe vorhanden ist. Dadurch ist es möglich, die Schleifzeit für die Kurbelwelle erheblich zu verringern Durch die interpolierend ausgeführte Bewegung der Schleifscheibe um ihre X1-, Z1- und WK1-Achse ist es nun möglich, dass Radien unterschiedlicher Abmessungen ohne jeweilige Abrichtvorgänge mittels der CBN-Schleifscheibe geschliffen werden können. Das heißt, die zu schleifenden Radien sind von der Schleifscheibe ohne deren Abrichten direkt abkopierbar. Dies stellt einen entscheidenden Zeit- und Genauigkeitsvorteil im Vergleich zu Korund-Schleifscheiben dar.

Aber auch im Übergang zu den senkrecht zur Längsachse der jeweiligen Lagerstellen angeordneten Planflächen ist es nötig, dass die WK1-Achse der schleifenden Schleifscheibe aktiviert werden muss, um vom Durchmesserschleifen an den Lagerflächen und sich daran anschließenden Radien auf eine senkrecht dazu angeordnete Planfläche übergehen zu können.

Mit dem erfindungsgemäßen Verfahren ist es somit möglich, eine Großkurbelwelle in einer einzigen Aufspannung mit hoher Genauigkeit bei hoher Standzeit der eingesetzten Schleifscheibe und damit bei hoher Wirtschaftlichkeit zu schleifen.

Vorzugsweise wird die erste Schleifscheibe in definierten Intervallen zwischen der Schleifbearbeitung der Kurbelwelle abgerichtet. Ein wesentlicher Vorteil der CBN-Schleifscheibe besteht gerade darin, dass beispielsweise erheblich mehr Schleifvorgänge ausgeführt werden können, ohne dass die Schleifscheibe abgerichtet werden muss. Ein Abrichten ist jedenfalls nicht zum Zwecke der Erzielung einer bestimmten Kontur erforderlich, weil die hohe Flexibilität des Einsatzes aller drei CNC-gesteuerten Achsen der Schleifscheibe das Erzeugen einer beliebigen Kontur wie auch einer beispielsweise zylindrischen Kontur mit hoher Genauigkeit ermöglicht, ohne dass dafür jedesmal ein Abrichten erforderlich wäre. Ein Abrichten erfolgt vorzugsweise jedenfalls immer nur dann, wenn ein bestimmter Verschleiß an der Schleifscheibe kompensiert werden muss, nicht jedoch zur Erzielung einer Profilierung an der Schleifscheibe.

Vorzugsweise werden auch die Längenmaße der Kurbelwelle, gemessen und zur Steuerung der Schleifposition zumindest der ersten Schleifscheibe an deren CNC-Steuerung für die X1- und Z1-Achse übermittelt. Dadurch ist es möglich, die Schleifscheibe exakt an die Schleifposition zu bringen, mittels welcher die zu schleifende axiale Längenabmessung eingehalten werden kann.

Gemäß einer Weiterbildung der Erfindung werden die X1-, Z1- und WK1-Achsen zumindest der ersten Schleifscheibe so gesteuert, dass eine von der zylindrischen Form der Haupt- und/oder Hublager abweichende gewünschte Form erzeugt wird. Mit dem erfindungsgemäßen Verfahren ist es darüber hinaus möglich, dass durch eine entsprechende Anzahl von Messebenen zur Bestimmung des aktuellen Durchmessers an unterschiedlichen Positionen längs der Längsachse des jeweiligen Lagers eine hochgenaue zylindrische Form zu erreichen, welche bei den eingesetzten In-Prozess-Messvorrichtungen gemäß dem Stand der Technik nicht oder allenfalls nur eingeschränkt möglich ist, weil insoweit immer nur an einer einzigen Stelle eines Lagerbereiches eine Messung vorgenommen wird.

Weiter vorzugsweise wird beim Schleifen eines zylindrischen Endbereiches und/oder Flansches der Kurbelwelle ein Spannfutter an einem Werkstückspindelstock an einem Endbereich der Kurbelwelle oder einem Reitstock an einem dazu gegenüberliegenden Endbereich der Kurbelwelle oder anstelle des Reitstockes an einem zweiten Werkstückspindelstock dieses Endbereiches gelöst und die Kurbelwelle dann durch jeweils vorgesehene Spitzen des jeweiligen Spannfutters zentrisch gehalten. Bei beispielsweise leichtem Druck der Spitzen auf die Zentrierbohrung der Kurbelwelle über die jeweiligen Spannfutter kann die Kurbelwelle darüber auch angetrieben werden. Bei einem gelösten Spannfutter ist es jedenfalls möglich, dass mittels der zumindest ersten Schleifscheibe ein Endbereich der Kurbelwelle geschliffen werden kann, und zwar vorgeschliffen und fertiggeschliffen. Bei dem gegenüberliegenden Endbereich der Kurbelwelle wird analog verfahren. Damit ist es möglich, eine Großkurbelwelle in einer einzigen Aufspannung bei hoher Wirtschaftlichkeit und Genauigkeit komplett zu schleifen.

Gemäß einer Weiterbildung ist bei dem erfindungsgemäßen Verfahren eine zweite CBN-Schleifscheibe vorgesehen, welche mittels ihrer CNC-gesteuerten X2- und Z2-Achsen-Antriebe sowie eines zusätzlichen CNC-gesteuerten Antriebs in einer WK2-Schwenkachse das Vor- und Fertigschleifen der Kurbelwelle ausführt. Durch das Vorsehen von zwei separaten CBN-Schleifscheiben, welche auf jeweiligen Schleifspindelstöcken gelagert sind, kann die Fertigungszeit für eine Großkurbelwelle verringert, gegebenenfalls sogar halbiert werden.

Um bei besonders langen Kurbelwellen eine Deformation während der Bearbeitung in Folge des Einbringens von Schleifkräften während des Schleifens zu kompensieren, sind weiter vorzugsweise mindestens vier Lünettensitze zu schleifen, an welche dann entsprechende Lünetten angestellt werden.
Vorzugsweise werden die Endbereiche der Kurbelwelle mit der ersten Schleifscheibe geschliffen, wobei es auch möglich ist, dass der Endbereich einer Seite der Kurbelwelle mit der ersten Schleifscheibe und der dazu gegenüberliegende Endbereich der Kurbelwelle mit einer zweiten Schleifscheibe geschliffen werden, wobei auch die zweite Schleifscheibe in definierten Intervallen abgerichtet wird. Die Länge der definierten Intervalle ist unter analogen Gesichtspunkten zu bestimmen, wie dies auch für die erste Schleifscheibe obenstehend beschrieben worden ist.

Mittels der CBN-Schleifscheiben werden vorzugsweise auch Radien der Mantelflächenkontur der Kurbelwelle insbesondere an ihren Lagerstellen durch direktes Abkopieren geschliffen, und zwar ohne dass ein vorausgehendes Abrichten der Schleifscheiben auf den genauen Radiuswert erforderlich ist.

Da mit dem Komplettschleifen bzw. Komplettbearbeiten der Großkurbelwelle in einer einzigen Aufspannung ein zwischen den einzelnen Bearbeitungsschritten ansonsten erforderliches Be-/Entladen entfällt, wird der Nachteil vermieden, welcher bei Ausführen der Bearbeitung in mehreren unterschiedlichen Schleifstationen sich ergäbe, nämlich dass sich während externer Messungen die Kurbelwelle thermisch verändert, bis diese wieder in die nächste Schleifmaschine bzw. Schleifstation geladen wird. Abgesehen davon, bedeutet es für Großkurbelwellen immer einen beträchtlichen apparativen Aufwand, diese schweren Kurbelwellen zu be- bzw. zu entladen.

Beim zuvor beschriebenen Einsetzen von zwei Schleifspindelstöcken ist es neben dem zumindest teilweise realisierten Parallelbearbeiten beim Vor- und/oder Fertigschleifen der Kurbelwellen möglich, zwei unterschiedlich konturierte Schleifscheiben zum Einsatz zu bringen. Letzteres hat den Vorteil, dass die Schleifscheiben jeweils besser auf die jeweilige Bearbeitungsaufgabe an den einzelnen Lagerstellen angepasst bzw. darauf optimiert werden können.

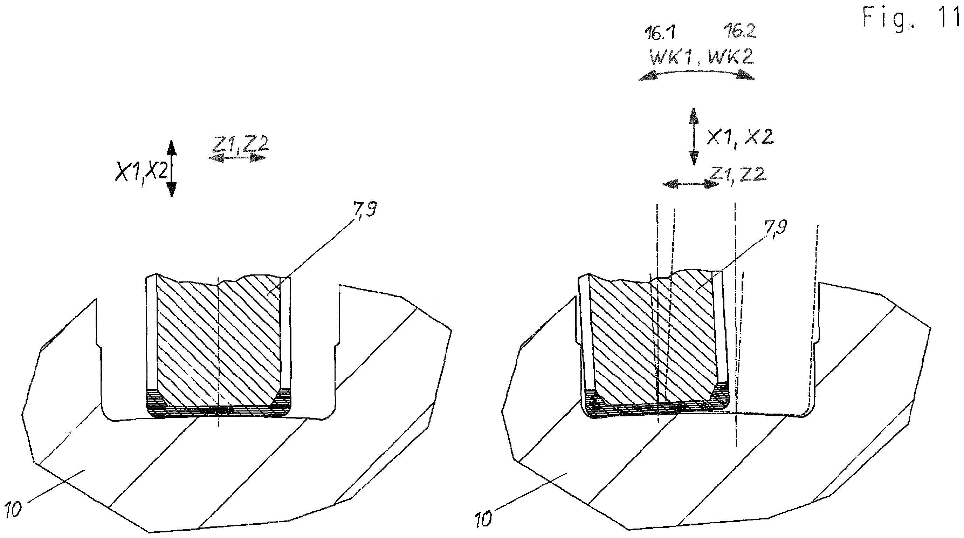

Für das Schleifen der Großkurbelwellen sollen die nachfolgenden unterschiedlichen Technologien bzw. Arbeitsabfolgen beim Schleifen der Lagerstellen bzw. der zu schleifenden zylindrischen Endbereiche und Flansche zum Einsatz kommen:
a) Vor- und Fertigschleifen von Hauptlagern und Hublagern mit oder ohne Übergangsradien und/oder Planseiten;
b) Vor- und Fertigschleifen eines Passlagers an dessen die eigentliche Lagerstelle begrenzenden Planseiten;
c) Schleifen von Übergangsradien an den Lagerstellen am Übergang zu den Planseiten mit der Möglichkeit der Radiusinterpolation an Hauptlagern und/oder Hublagern und am Passlager, wobei die Radien an den Übergängen von Durchmesser an den Lagerstellen zu deren Planseiten mit einer Schleifscheibe mit Radius an deren "Ecke" geschliffen werden. Da die Radien an den Lagerübergängen in vielen Kurbelwellen an den Haupt- und Hublagern nicht gleich ausgeführt sind, wird an der Schleifscheibe ein kleinerer Radius abgerichtet und dieser Radius an der Lagerstelle dann "auskopiert" (siehe Figur 11);
d) Schleifen der Endbereiche der Kurbelwelle wie Flansch und/oder Zapfenbearbeitung, wobei durch die zusätzliche WK-Achse der Schleifscheiben auch die Möglichkeit besteht, kegelförmige Wellenenden zu schleifen;
e) Schleifen der Stirnplanflächen an den Zapfen und/oder Zapfenenden;
f) Durchführen des Schleifens lediglich mit CBN-Schleifscheiben; und
g) Verwenden von Schleiföl oder Schleifemulsion als Kühlschmiermittel.
Eine In-Prozess-Messung mit einer Messvorrichtung wird zuallererst für die Haupt- und die Hublager eingesetzt, wobei die verwendete Messvorrichtung über die Schleifscheibenbreite in Längsrichtung der Lagerstelle so verfahrbar ist und damit an mehreren Stellen in Längsrichtung der Lagerstelle Messwerte für den Durchmesser aufgenommen werden können, dass es möglich ist, an jeder Lagerstelle auch die Abweichung von der Zylindrizität, eine Konizität oder ein Balligkeit zu messen. Darüber hinaus ist es auch möglich, mit dieser Messeinrichtung nicht nur jeweilige Durchmesser an der Lagerstelle zu messen, sondern auch deren Rundheit automatisch zu erfassen. Die Messwerte werden gemäß der Erfindung in die entsprechenden Steuereinrichtungen der Maschine eingegeben, so dass mit entsprechenden Korrekturen während des Schleifprozesses die erzielte Kontur am Werkstück korrigiert und die gewünschte Sollkontur erhalten werden kann, und zwar ohne dass die Kurbelwelle aus der Maschine entnommen werden und in einem speziellen Messraum mit speziellen Messgeräten vermessen werden muss. Mit der vorhandenen Messvorrichtung kann auch eine Post-Prozess-Messung an den Lagerstellen vorgenommen werden. Hierzu wird die Schleifscheibe bis auf einen geringen radialen Abstand an die Lagerstellen zugestellt, und die Messvorrichtung kann nun im Post-Prozess-Messverfahren die Durchmesser vermessen. Nach diesem Messverfahren ist es ebenfalls möglich, an jeder Lagerstelle auch die Abweichung von der Zylindrizität, eine Konizität oder eine Balligkeit zu messen.

Zusätzlich zur Durchmesser- und Rundheitsmessung ist auch noch eine Einrichtung zum Messen der Längspositionierung der Kurbelwelle vorgesehen, wobei auf dem Schleifspindelstock bzw. auf den Schleifspindelstöcken jeweils ein Präzisionsmesskopf vorgesehen ist. Damit ist es möglich, Längenmaße an der Kurbelwelle automatisch auszumessen. Als Messkopf wird ein sogenannter Schaltmesskopf verwendet, das heißt, der Taster lenkt bei Kontakt mit dem Werkstück durch das Verfahren des Schleifspindelstockes entlang von dessen Z-Achse aus, bis ein elektrisches Schaltsignal ausgegeben wird. Dieses Schaltsignal wird dann mit dem Positionswert des Längenmessgerätes der Z-Achse verrechnet. Durch ein mehrfaches Vermessen von definierten oder allen Planseiten der Lagerstellen kann somit für jede Lagerstelle die genaue Längsposition vor dem Schleifen ermittelt werden, so dass zum einen für jede Planseite, die geschliffen werden muss, das Schleifaufmaß exakt ausgemessen und damit auch ermittelt werden kann. Dadurch lässt sich die Schleifzeit optimieren, weil ein sogenanntes "Luftschleifen" eliminiert werden kann. Mit dem gleichen Messkopf lassen sich auch nach diesem Prinzip Radialpositionen an der Kurbelwelle bestimmen. Hier werden dann auch die ausgemessenen Radialpositionen mit den C-Achsen der Werkstückspindelstöcke verrechnet.

Die Komplettbearbeitung einer Großkurbelwelle in einer einzigen Aufspannung ist vor allen Dingen auch deshalb von Bedeutung, weil eine Großkurbelwelle mit beispielsweise einer Länge von ca. 2.500 mm eine Schleifzeit von ca. zwei Stunden erfordert.

Gemäß einem zweiten Aspekt der Erfindung wird eine Schleifmaschine zum Komplettbearbeiten von Großkurbelwellen von LKW-, Schiffs- oder Stationärmotoren bereitgestellt, bei welcher auf ihrem Maschinenbett zumindest die folgenden Elemente angeordnet sind:
a) ein erster und ein zweiter Werkspindelstock mit je einem CNC-gesteuerten Drehantrieb C1 und C2. Zwischen den Werkstückspindelstöcken ist die zu schleifende Kurbelwelle aufgespannt. Diese Aufspannung bleibt während der gesamten, kompletten Schleifbearbeitung der Kurbelwelle beibehalten, sodass Umspannvorgänge nicht erforderlich sind. Die Drehantriebe C1 und C2 treiben die Kurbelwelle an deren beiden Enden synchron zueinander an. Sie gewährleisten also eine sogenannte elektrische Welle. Durch den synchronen Antrieb der beiden Drehantriebe C1 und C2 ist sichergestellt, dass die Kurbelwelle während ihrer Rotation nicht tordiert wird. Wegen der relativ großen Länge der mit der erfindungsgemäßen Schleifmaschine bearbeiteten Großkurbelwellen ist es erforderlich, diese an mehreren Hauptlagern, noch bevorzugter an allen Hauptlagern, abzustützen. Dadurch werden Reibmomente auf die Kurbelwelle ausgeübt, welche ihrerseits zu einer Torsionsbelastung führen. Um diese Torsionsbelastung zu vermeiden bzw. ihr entgegenzuwirken, sind die Drehantriebe C1 und C2 an beiden Enden der Kurbelwelle angeordnet und synchron zueinander arbeitend.
b) Abstützungen an Hauptlagern der Kurbelwelle, welche durch eine Anzahl von Lünetten gewährleistet sind, welche an die jeweiligen Kurbelwellen-Hauptlager dieses kontaktierend angefahren werden, nachdem mit einer auf einem ersten Schleifspindelstock angeordneten ersten Schleifscheibe ein jeweiliger Lünettensitz geschliffen worden ist.
c) der erste Schleifspindelstock mit der ersten Schleifscheibe, wobei diese Schleifscheibe eine CBN-Schleifscheibe ist und CNC-gesteuerte Antriebe ihrer X1- und Z1-Achsen zum Vor- und Fertigschleifen zumindest von Haupt- und Hublagern der Kurbelwelle aufweist. Darüber hinaus ist für diese erste Schleifscheibe ein weiterer CNC-gesteuerter Antrieb für eine WK1-Schwenkachse vorgesehen, wobei die X1-, Z1- und WK1-Achsen so interpolierbar zueinander und voneinander abhängig steuerbar sind, dass eine gewünschte Mantelflächenkontur zumindest der Haupt- und Hublager erzielbar ist.
d) eine Messeinrichtung, welche auf dem Schleifspindelstock angeordnet ist und eine parallel zur Längsachse der Haupt- oder Hublager verlaufende Verstellachse aufweist, entlang welcher die Messeinrichtung in Messpositionen gebracht werden kann, an welchen aktuelle Durchmesser durch die Messeinrichtung aufgenommen werden können.
Wobei die Messeinrichtung (30) dazu konfiguriert ist, mindestens zwei aktuelle Durchmesser an voneinander längs der axialen Länge der Haupt- und/oder Hublager beabstandeten Messorten in einem Messvorgang zu messen. Auf Basis dieser gemessenen aktuellen Durchmesser sind die X1-, Z1- und WK1-Achsen der ersten Schleifscheibe zur Erzielung einer gewünschten Sollkontur steuerbar.

Insbesondere für Großkurbelwellen müssen die Schleifspindeln auch entsprechend groß und schwer dimensioniert werden. Das Bewegen dieser großen Massen erfordert zwar große Antriebe, für eine hochgenaue Oberfläche bzw. eine hochgenaue gewünschte Sollmantelflächenkontur insbesondere an den Lagern einer derartigen Kurbelwelle müssen diese Antriebe jedoch spielfrei und extrem reibungsarm laufen. Der wesentliche Vorteil der zusätzlichen WK-Achse der Schleifscheiben besteht darin, dass die damit bewegten Schleifscheiben um relativ kleine Winkelbeträge trägheitsarm und mit großer Genauigkeit schräg gestellt werden können, um damit ein zuverlässiges und kostengünstiges Schleifen von entweder gewölbten und/oder geneigten Werkstückkonturen zu erreichen oder Fehler, d. h. Abweichungen von der zylindrischen gewünschten Sollkontur, kompensieren zu können. Die WK-Achse wird also mit ihrem zugehörigen Antrieb genau einstellbar ausgelenkt, sodass die Schleifscheibe gegenüber der Ausgangsstellung entsprechend leicht schräg gestellt ist. Diese Schwenkachse ist im Wesentlichen spielfrei in ihrer Schwenkfunktion. Mit der erfindungsgemäßen Schleifmaschine ist es somit möglich, auch mit eben abgerichteten Schleifscheiben den sogenannten "Ballus" am entsprechenden Lager zu schleifen. Mit den X- und Z-Achsen für die Bewegung der Schleifscheibe ist eine waagrechte Bezugsebene festgelegt, wie sie bei den üblichen Rund-/Unrund-Universalschleifmaschinen vorliegt. Eine genaue zylindrische Kontur zu schleifen, setzt voraus, dass die Hauptlager und/oder die Hublager genau achsparallel eingespannt sind. Wegen häufig nicht zu vermeidender Einspannfehler und wegen der Tatsache, dass große Kurbelwellen relativ weiche Gebilde darstellen und trotz aller Sorgfalt beim Schleifen nicht so gelagert werden können, dass die Mittelachsen der Spann- und Stützelemente aller Hauptlager genau fluchtend zur Längsachse der Kurbelwelle verlaufen, sodass geringe Abweichungen von der gewünschten Sollkontur entstehen, ist es durch die zusätzliche WK-Achse für die Schleifscheibe möglich, diesen Fehlern entgegenzuwirken und eine damit genauere gewünschte Sollkontur gerade bei den Großkurbelwellen zu erreichen. Darüber hinaus ist mit dieser zusätzlichen WK-Schwenkachse die Möglichkeit gegeben, auch eine ballige Umfangsfläche an dem jeweiligen zu schleifenden Lager zu erzeugen. Eine nach außen gewölbte, ballige Kontur ist auch mit einer schmalen Schleifscheibe erzielbar, wenn diese nach beiden Seiten schräg gestellt werden kann, d. h. verschwenkt werden kann. Somit ist es nicht mehr erforderlich, eine entsprechend der gewünschten balligen Kontur eines Lagers vorhandene profilierte Schleifscheibe zu erzeugen, welche über die gesamte Lagerbreite mit ihrer Dicke, d. h. der Schleifscheibenbreite, reicht.

Die an beiden Enden der Kurbellwelle angreifenden und diese an den Endbereichen spannenden Werkstückspindelstöcke sind insbesondere hydraulisch verfahrbar. Die hydraulische Verfahrbarkeit ermöglicht eine exakte und gut positionierbare Einstellung, sodass die Kurbelwelle an ihren Enden optimal gespannt werden kann.

Vorzugsweise weist der zweite Schleifspindelstock eine zweite Schleifscheibe auf, welche ebenfalls eine CBN-Schleifscheibe ist und mit CNC-gesteuerten X2- und Z2-Achsen zum Vor- und Fertigschleifen der Kurbelwelle versehen ist. Vorzugsweise weist diese zweite Schleifscheibe ebenfalls einen zusätzlichen CNC-gesteuerten Antrieb für eine WK2-Schwenkachse auf. Diese WK2-Schwenkachse der zweiten Schleifscheibe hat dieselbe Funktion und ist analog aufgebaut zu der WK1-Schwenkachse für die erste Schleifscheibe.

Da es verschleißbedingt erforderlich ist, die CBN-Schleifscheiben gelegentlich, jedoch nicht nach jedem Schleifvorgang, wie das für Korund-Schleifscheiben der Fall ist, abzurichten, weist die Schleifmaschine vorzugsweise des Weiteren eine Abrichtvorrichtung mit einem Diamantabrichtrad auf, mittels welcher die erste und die zweite Schleifscheibe auf ihre jeweilige Schleifscheiben-Sollkontur abgerichtet werden können.

Zum exakten Schleifen der ebenen Flächen der Flansche an den Endbereichen der Kurbelwelle wie auch der Planseiten an den eine jeweilige Lagerfläche begrenzenden Wangen der Kurbelwelle ist des Weiteren vorzugsweise an einem oder beiden Schleifspindelstöcken eine Längenmessvorrichtung angeordnet, welche entlang der Z-Achse in unterschiedliche Messpositionen verfahrbar ist und mittels welcher die zweite Schleifscheibe an ihren Schleifort zum Schleifen der jeweiligen Planflächen an der Kurbelwelle steuerbar ist. Damit kann auch eine hohe Genauigkeit der Planflächen der Kurbelwelle zueinander erreicht werden. Vorzugsweise weist die Längenmesseinrichtung einen Schaltmesskopf auf.

Weiter vorzugsweise weist die Schleifmaschine mehrere, zumindest vier Lünetten auf. Die Lünettenhalterungen sind auf dem Schleiftisch verfahrbar gelagert, sodass sie an die jeweilige Lagerstelle angefahren werden können, nachdem dort entsprechende Lünettensitze geschliffen worden sind. Damit ist es möglich, die Kurbelwelle entlang ihrer Längsrichtung zuverlässig abzustützen, um deren Durchbiegung während des Bearbeitens zu verhindern, d. h. um auch die durch die Schleifscheiben in die Kurbelwelle während des Schleifens eingeleiteten Schleifkräfte aufzunehmen.

Die Drehantriebe C1 und C2 bleiben während der gesamten Komplettschleifbearbeitung der Kurbelwelle in einer die Kurbelwelle spannenden Stellung. Das wird zum einen während des Schleifens der Haupt- und der Hublager durch entsprechende Spannfutter mit Spannbacken erzielt, welche an den äußeren zylindrischen Endbereichen der Kurbelwelle angreifen. Wenn im Sinne einer Komplettbearbeitung der Kurbelwelle diese auch geschliffen werden, müssen die Spannbacken der jeweiligen Spannfutter gelöst und zurückgefahren werden. Damit die Kurbelwelle nicht umgespannt werden muss, weisen die Spannfutter mit den Drehantrieben C1 und C2 gekoppelte, mitangetriebene Spitzen auf, welche in die Zentrierbohrungen der Kurbelwelle an den zylindrischen Endbereichen eingreifen und dadurch die Kurbelwelle, diese rotatorisch drehend, zwischen den Spitzen aufspannen.

Um während des Schleifens der Hublager ein zuverlässiges Zuführen von Kühlschmiermittel/Schleiföl an die sich exzentrisch bewegenden, d. h. auf einer Orbitalbahn umlaufenden Schleifstellen an den Hublagern zu gewährleisten, ist des Weiteren eine Vorrichtung mit einem zusätzlichen CNC-Antrieb zum Nachführen der Kühldüsen vorgesehen, und zwar in der Gestalt, dass die Kühldüsen während des exzentrischen Umlaufs der Schleifstelle im Wesentlichen äquidistant zu dieser Schleifstelle verbleiben, sodass zuverlässig mit etwa gleichem Abstand Kühlschmiermittel an die Schleifstelle zugeführt wird.

Weitere Merkmale, Vorteile und Anwendungsmöglichkeiten der Erfindung werden nun anhand der nachfolgenden Zeichnung detailliert beschrieben. In der Zeichnung zeigen:
- Figur 1:: eine Draufsicht auf die erfindungsgemäße Schleifmaschine;
- Figur 2:: eine Teilansicht aus Figur 1 mit eingespannter Kurbelwelle in Draufsicht;
- Figur 3:: eine Kurbellwelle mit schematisch dargestellten Schleifbereichenzur Veranschaulichung der Schleifaufgabe an der Kurbelwelle;
- Figur 4:: eine werkstückspindelstockseitige Einspannung der Kurbelwelle an ihren Endbereichen;
- Figur 5:: den Werkstückspindelstock mit zurückgezogenen Spannbacken und der Zentrierspitze im Eingriff mit der Kurbelwelle in deren Zentrierbohrung;
- Figur 6:: eine reitstockseitige Einspannung der Kurbelwelle mit geschlossenem Spannfutter;
- Figur 7:: die reitstockseitige Einspannung der Kurbelwelle mit der Zentrierspitze im Eingriff in der Zentrierbohrung und angedeuteter Schleifscheibe zum Ausführen des Schleifens am zylindrischen Endbereich der Kurbelwelle;
- Figur 8:: eine Darstellung gemäß Figur 7, mit jedoch einem konusförmigen Endbereich am zylindrischen Endteil der Kurbelwelle und angedeuteter Schleifscheibe;
- Figur 9:: eine Darstellung mit komplett am Reitstock zurückgezogenem Spannfutter und zusätzlicher Lünettenabstützung am zylindrischen Endbereich der Kurbelwelle zum Zwecke des Schleifens der Stirnseite des zylindrischen Endbereichs;
- Figur 10:: eine Darstellung des Auskopierens mittels einer CBN-Schleifscheibe bei unterschiedlichen Übergangsradien an den Lagerstellen zwischen unmittelbarem Lagerbereich und Planseiten;
- Figur 11:: ein Schleifen einer balligen Lagerkontur unter Verwendung der zusätzlichen Schwenkachsen WK1 bzw. WK2 im Vergleich zum Schleifen lediglich mit den X- und Z-Achsen;
- Figur 12:: eine prinzipielle Anordnung einer In-Prozess-Messvorrichtung zur Vermessung der aktuellen Durchmesser an Lagerstellen;
- Figur 13:: eine prinzipielle Darstellung der Nachführung der Kühldüsen beim Schleifen der exzentrisch umlaufenden Hublager; und
- Figur 14:: eine prinzipielle Darstellung von im Wesentlichen stationär angeordneten Kühldüsen beim Schleifen der Hauptlager.

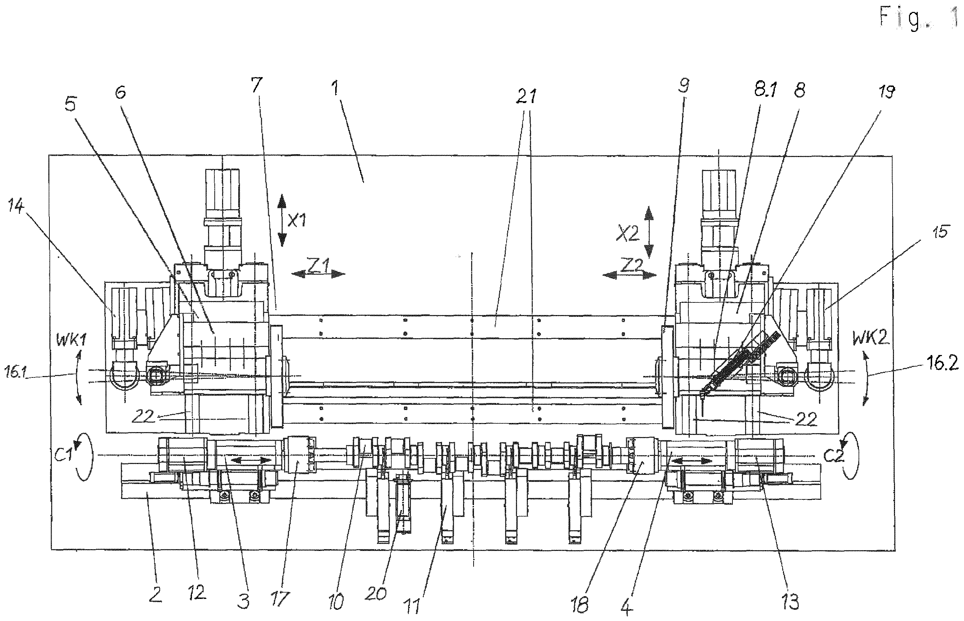

Figur 1 zeigt den prinzipiellen Aufbau der erfindungsgemäßen Schleifmaschine, auf welcher Großkurbelwellen bearbeitet werden können. In üblicher Weise ist die Schleifmaschine auf einem Maschinenbett 1 angeordnet, welches sämtliche erforderlichen Baugruppen aufnimmt. Im hinteren Bereich des Maschinenbettes 1 ist ein erster Schleifspindelstock 5 angeordnet, welcher eine Schleifspindel 6 mit einer ersten CBN-Schleifscheibe 7 trägt. Des Weiteren ist ein zweiter Schleifspindelstock 8 angeordnet, welcher eine Schleifspindel 8.1 mit einer zweiten Schleifscheibe 9 trägt. Jeder Schleifspindelstock 5, 8 ist auf einem Kreuzschlitten aufgebaut, der jeweils eine gesteuerte X- und Z-Achse aufweist. Über diese Achsen sind somit die erste Schleifscheibe 7 über ihre X1- und Z1-Achse sowie die zweite Schleifscheibe 9 über ihre X2- und Z2-Achse antreibbar bewegbar. Des Weiteren weist jeder der Schleifspindelstöcke 5, 8 jeweils an seiner Schleifspindeleinheit eine sogenannte WK-Achse auf, die ein Einschwenken der Schleifspindel 6 am ersten Schleifspindelstock 5 und der Schleifspindel am zweiten Schleifspindelstock 8 mit der jeweils zugehörigen Schleifscheibe an der zu schleifenden Lagerstelle ermöglicht, um eine zylindrische Kontur hochgenau zu schleifen oder gezielt eine von der zylindrischen abweichende Kontur an der Lagerstelle herzustellen. Die Schleifspindelstöcke 5, 8 realisieren ihre jeweiligen X-Bewegungen über eine Führung 22 und ihre Z-Bewegungen über entsprechende Führungen 21. Die Schwenkachse WK1 der ersten Schleifspindel 6 am ersten Schleifspindelstock 5 wird als WK1 bezeichnet und trägt die Bezugsziffer 16.1. Die Schwenkachse der Schleifspindel der zweiten Schleifscheibe 9 am zweiten Schleifspindelstock 8 trägt die Bezeichnung WK2 und weist die Bezugsziffer 16.2 auf. Die Antriebe für die Z-Achse der Schleifspindelstöcke 5, 8 werden für den ersten Schleifspindelstock durch einen Antrieb 14 der Z1-Achse realisiert, während ein Antrieb 15 für die Z2-Achse der zweiten Schleifscheibe am zweiten Schleifspindelstock 8 vorgesehen ist. Beide Antriebe 14, 16 sind vorzugsweise als Master-Slave-Antriebe ausgebildet.

Am zweiten Schleifspindelstock 8 ist eine Längspositioniervorrichtung 19 vorgesehen, welche der Vermessung der Längen bzw. der Ermittlung der Schleifpositionen zum Schleifen der Planflächen an der Kurbelwelle 10 vorgesehen ist.

Alle Achsbewegungen der Schleifmaschine sind CNC-gesteuert verfahrbar.

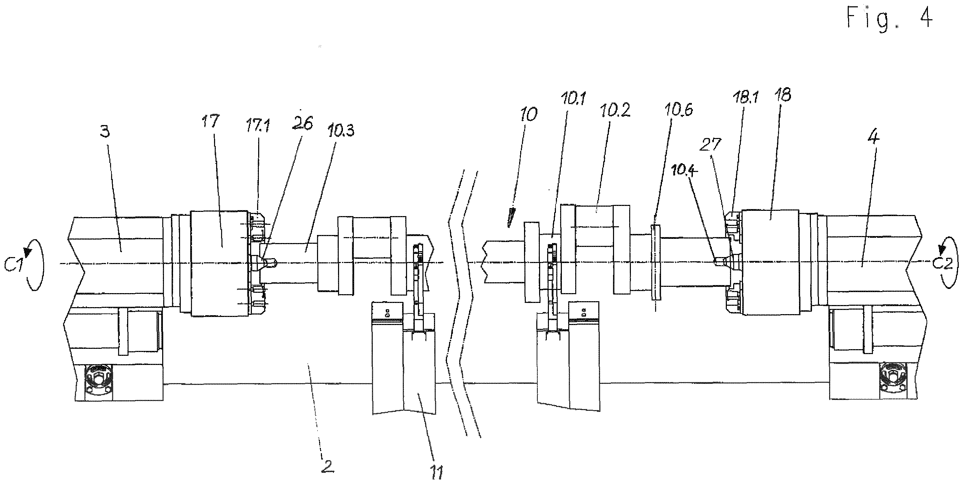

Im vorderen Teil auf dem Maschinenbett 1 befindet sich ein Schleiftisch 2, auf welchem ein Werkstückspindelstock 3 mit einem Antrieb 12 für dessen C1-Achse vorgesehen ist. Der Werkstückspindelstock 3 weist eine Werkstückspindel mit einem Spannfutter 17 auf, das neben Spannbacken eine Spitze aufweist. Die Spannbacken 17 liegen ausgleichend auf dem Endzapfen 10.3 der Kurbelwelle in ihrer Spannposition an. Die Spannbacken 17 greifen Endabschnitten 10.3 der Kurbelwelle 10 an, und die Spitze greift in eine in der Planseite des Endabschnittes 10.3 der Kurbelwelle 10 vorgesehene Zentrierbohrung 10.4 ein. Der Werkstückspindelstock 3 ist bezüglich seiner Positionierung vorzugsweise hydraulisch verfahrbar, was durch den Doppelpfeil auf der Werkstückspindel des Werkstückspindelstockes 3 angedeutet ist. Durch diese Verfahrbarkeit ist es möglich, dass die Spitze 26 (siehe Fig. 4) zum Be-/Entladen der Kurbelwelle nach zurückgefahrenen Spannbacken 17 aus der Zentrierbohrung 10.4 der Kurbelwelle 10 herausgefahren werden kann.

Auf der dem Werkstückspindelstock 3 gegenüberliegenden Seite der Schleifmaschine ist ein Reitstock 4 angeordnet, welcher einen Antrieb 13 für dessen C2-Achse aufweist. Anstelle eines Reitstockes kann auch ein zweiter Werkstückspindelstock in der Art des Werkstückspindelstockes 3 vorgesehen sein. Am vorliegenden Ausführungsbeispiel ist der Reitstock 4 ähnlich dem Werkstückspindelstock 3 in gespiegelter Ausführung aufgebaut. Der Reitstock 4 ist ebenso zum Be-/ Entladen der Kurbelwelle vorzugsweise hydraulisch verfahrbar, was durch den Doppelpfeil auf der Reitstockspindel angeordnet ist. Der Reitstock 4 weist ein Spannfutter 18 auf, welches Spannbacken und eine mitantreibbare Zentrierspitze 27 aufweist, welche in eine in der Planseite des Endabschnittes der Kurbelwelle angeordnete Zentrierbohrung 10.4 eingreift. Zwischen dem Spannfutter 17 des Werkstückspindelstocks 3 und dem Spannfutter 18 des Reitstockes 4 ist die Kurbelwelle 10 aufgespannt.

Die beiden Antriebsachsen C1 des Werkstückspindelstockes 3 und C2 des Reitstockes 4 werden als gekoppelte Achsen gefahren, so dass die C1- und C2-Achse synchron elektrisch CNC-gesteuert angetrieben werden. Aufgrund des synchronen Antriebs der Kurbelwelle an beiden Kurbelwellenenden in deren eingespanntem Zustand wird verhindert, dass die Kurbelwelle über ihre Länge durch Torsion im elastischen Bereich des Werkstoffes "in sich verdreht wird". Dadurch kann sichergestellt werden, dass die Kurbelwelle mit sehr hoher Präzision geschliffen werden kann.

Wegen der relativ großen Länge der Kurbelwelle 10 wird diese an mehreren, im vorliegenden Fall an vier, Hauptlagern durch Lünetten 11 gestützt, welche ihrerseits auf dem Schleiftisch 2 befestigt sind und so verfahren werden können, dass sie an ein jeweiliges Hauptlager 10.1 angestellt und dieses abstützen können, nachdem an diesen Hauptlagern entsprechende Lünettensitze geschliffen worden sind.

Wenn die Kurbelwelle 10 komplett fertig geschliffen worden ist, und aus der Schleifmaschine entladen werden soll, sind das Spannfutter 17 des Werkstückspindelstockes 3 und das Spannfutter 18 des Reitstockes 4 zurückgezogen bei gleichzeitigem Außereingriffbringen der Spitzen 26, 27 der jeweiligen Spannfutter. In diesem Fall ruht die Kurbelwelle auf sogenannten, nicht dargestellten Auflageprismen, die ebenfalls auf den Schleiftisch 2 montiert sind und an zwei Hauptlagern 10.1 angreifen. Eine so abgelegte Kurbelwelle kann dann mit entsprechenden Hebevorrichtungen aus der Schleifmaschine entnommen werden. Ebenso wird eine neue, noch zu schleifende Kurbelwelle in die Schleifmaschine geladen, indem sie auf diese Auflageprismen aufgelegt wird, woran sich ein Einspannen dieser Kurbelwelle an ihren jeweiligen Endbereichen durch die Spannfutter 17 und 18 anschließt.

Um durch mehrere Schleifvorgänge auftretenden Verschleiß an den CBN-Schleifscheiben 7, 9 zu kompensieren und eine gewünschte Sollkontur an der Schleifscheibe wieder herzustellen, werden in verschleißbedingten Intervallen die Schleifscheiben abgerichtet. Dazu ist auf dem Schleiftisch 2 zusätzlich eine Abrichtvorrichtung 20 mit einem Diamantrad angeordnet, mit welcher die Schleifscheibengeometrie µm-genau durch Abrichten wiederhergestellt werden kann.

Die am zweiten Schleifspindelstock 8 zusätzlich angeordnete Längenmessvorrichtung 19 weist einen Schaltmesskopf auf. Dieser Schaltmesskopf lässt sich durch Verfahren mit der X2- und der Z2-Achse des Schleifspindelstocks 8 in die verschiedenen Messpositionen bringen. Mit diesem Messtaster werden die tatsächlichen Längenmaße beispielsweise vor dem eigentlichen Schleifen am Rohteil wie auch an der fertigen Kurbelwelle gemessen. Mit dieser Messvorrichtung können aber auch Radialpositionen gemessen werden.

Um die aktuellen Durchmessermaße fortlaufend während des Schleifens wie auch am fertigen Werkstück messen zu können, ist eine sogenannte In-Prozess-Messvorrichtung vorgesehen. Aus Gründen der Übersichtlichkeit in Figur 1 ist diese hier nicht dargestellt. Diese In-Prozess-Messvorrichtungen werden in der Regel auf einem Schleifspindelstock 5, 8 aufgebaut, wobei normalerweise eine In-Prozess-Messvorrichtung pro Schleifspindel und Schleifscheibe vorgesehen ist. Diese Messvorrichtung weist eine zusätzliche CNC-gesteuerte Achse auf, so dass die Messeinrichtung unabhängig von der Bewegung der Schleifspindel mit ihrer Schleifscheibe entlang der Z-Achse bewegbar ist. Dadurch ist es möglich, in Längsrichtung beispielsweise der Haupt- und der Hublager an mehreren gewünschten Positionen Messwerte des aktuellen Durchmessers zu erhalten. Diese Messwerte sind einerseits erforderlich, um die Konizität oder den Ballus einer Lagerstelle noch während des Schleifprozesses zu überwachen und auf Basis der Messwerte eine entsprechende Steuerung des Schleifvorganges der entsprechenden Schleifscheibe vorzunehmen. Während des Schleifens kann somit erforderlichenfalls eine Maßkorrektur vorgenommen werden, so dass die geschliffene Sollkontur auch erreicht wird. Damit ist es möglich, sehr hohe Genauigkeiten auch bei diesen Großkurbelwellen zu realisieren. Diese Messvorrichtung bietet somit die Grundlage, in Verbindung mit den zusätzlichen Antrieben der Schwenkachsen WK1 und WK2 mit den Bezugszeichen 16.1 bzw. 16.2 auch eine Korrektur während des Schleifens vorzunehmen, um eine möglichst exakte gewünschte Mantelflächenkontur an der jeweiligen Lagerstelle zu erzielen.
Das Schleifen der Kurbelwellen wird an den Lagerstellen sowie auch an den zentrischen Partien an den Wellenenden mittels Schleifscheiben mit CBN-Belag realisiert. Vorzugsweise wird keramisch gebundenes CBN dafür verwendet, welches sich im fortlaufenden Schleifprozess in den bereits beschriebenen verschleißbedingten Intervallen auch abrichten lässt. Für spezielle Schleifaufgaben können jedoch auch Schleifscheiben mit galvanisch beschichtetem CBN zum Einsatz kommen.

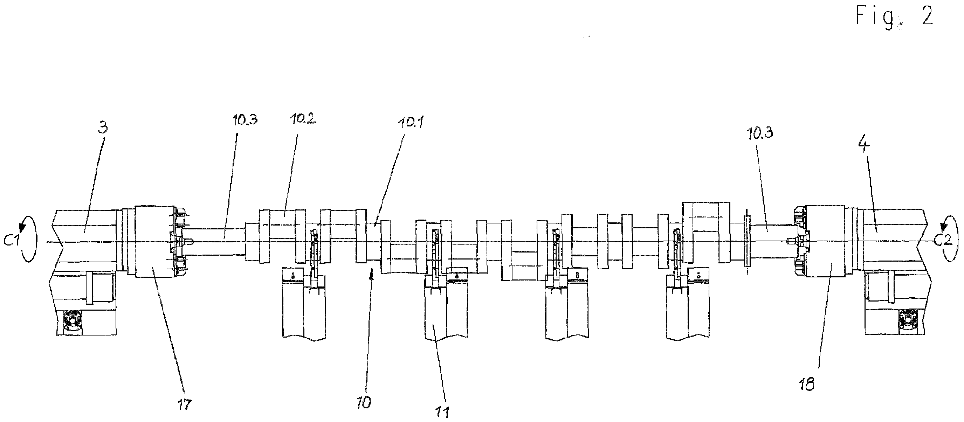

In Figur 2 ist eine Teilansicht der Figur 1 dargestellt, bei welcher der Schleiftischaufbau vergrößert dargestellt ist, welcher den Werkstückspindelstock 3 mit C1-Achse und dessen Spannfutter 17 sowie den Reitstock 4 mit dessen C2-Achse mit dem dazugehörigen Spannfutter 18 zeigt, wobei der Werkstückspindelstock 3 und der Reitstock 4 zwischen ihren Spannfuttern 17, 18 die Kurbelwelle 10 eingespannt halten. Die Einspannung ist so realisiert, dass die Mittelachsen des Werkstückspindelstockes 3, der Kurbelwelle, das heißt deren Hauptlager 10.1, und des Reitstockes 4 miteinander exakt fluchten. Die Kurbelwelle 10 ist an ihren jeweiligen Endbereichen an den Zapfen 10.3 mit den jeweiligen Spannbacken 17.1, 18.1 und Spitzen 26, 27 der Spannfutter 17, 18 aufgespannt. Zwischen je zwei Hauptlagern 10.1 sind entsprechende Hublager 10.2 der Kurbelwelle 10 angeordnet. An den Hauptlagern 10.1, welche zentrische Lagerstellen darstellen, sind Lünetten 11 zum Abstützen der Kurbelwelle 10 angestellt und an den zentrischen Lagerstellen 10.1 mit diesen im Eingriff. Die Kurbelwelle 10 ist an ihren zentrischen Enden fest eingespannt und wird sowohl durch den Antrieb der C1-Achse an der linken Seite als auch durch den Antrieb C2 an der rechten Seite synchron zueinander angetrieben. Die Spannbacken 17.1, 18.1 und die Zentrierspitzen 26, 27 sind so ausgebildet, dass die ausgleichenden Spannbacken 17.1, 18.1 Rundlauffehler oder Formungenauigkeiten an der Spannstelle zulassen, ohne nennenswert einen Einfluss auf die Zentrierspitzen 26, 27 im Spannfutter 17, 18 auszuüben. Es ist auch möglich, anstelle von Spannfuttern 17, 18 mit Zentrierspitzen 26,27 zentrisch spannende Spannfutter zum Einsatz zu bringen.

In Figur 2 ist der Spannzustand zum Schleifen der Lagerstellen 10.1, 10.2 gezeigt. Beim Schleifen der Endbereiche der Kurbelwelle 10 müssen die Spannzustände der Kurbelwelle 10 in der Maschine geändert werden, was in den nachfolgenden Figuren beschrieben ist, ohne jedoch die zentrische Einspannung der Kurbelwelle 10 aufzugeben. Damit ist es möglich, dass sowohl die Hauptlager 10.1 als auch die Hublager 10.2 wie auch die Endbereiche 10.3 der Kurbelwelle 10 in einer einzigen Aufspannung geschliffen werden können.

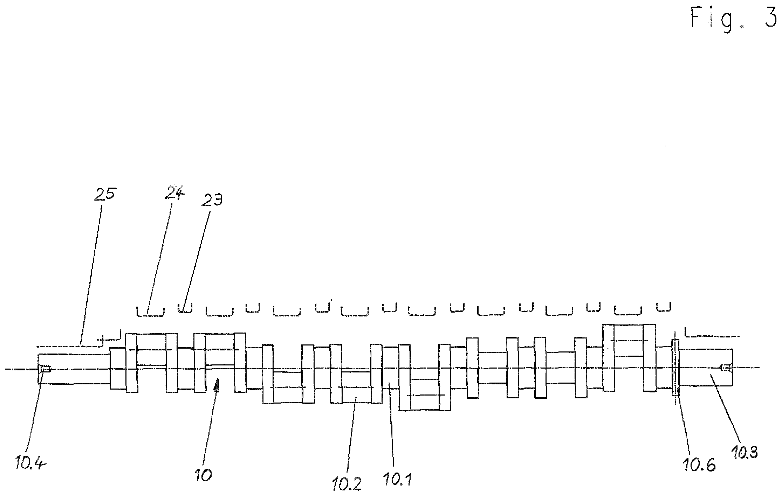

In Figur 3 ist in vereinfachter Darstellung eine Kurbelwelle 10 gezeigt, bei welcher angedeutete Schleifbereiche 23, 24, 25, das heißt die Bereiche, welche an der Kurbelwelle 10 im Sinne der Komplettbearbeitung bearbeitet werden müssen, eingezeichnet sind. Diese Darstellung stellt die entsprechenden Schleifaufgaben zusammen, und zwar im vorliegenden Fall für eine 8-Zylinder-Kurbelwelle eines Motors oder eine 16-Zylinder-Kurbelwelle eines V-Motors. An der Kurbelwelle 10 sind die Hauptlager 10.1, die Hublager 10.2 und die Wellenenden mit ihren Endbereichen in Form von Zapfen 10.3 zu schleifen, was in einer einzigen Maschine in einer Aufspannung erfolgt, ohne dass die Kurbelwelle 10 zwischenzeitlich be-/entladen werden muss. Die Hauptlager 10.1 sind durch den Schleifbereich 23 für die Hauptlager, die Hublager 10.2 durch den Schleifbereich 24 für die Hublager und die zylindrischen Endbereiche in Form von Zapfen 10.3 durch den Schleifbereich 25 für die Zapfen dargestellt. Darüber hinaus weist die Kurbelwelle an der rechten Seite einen Flansch 10.6 auf, welcher ebenfalls auch an seinen Planseiten geschliffen werden muss. Darüber hinaus weist die Kurbelwelle 10 an ihren stirnseitigen Enden Zentrierbohrungen 10.4 auf, welche dafür vorgesehen sind, dass Zentrierspitzen 26, 27 der jeweiligen Spannfutter 17, 18 eingreifen und die Kurbelwelle 10 zentrierend aufnehmen.

Bei der allgemeinen Schleifaufgabe werden zuerst die Lünettensitze an den Hauptlagern 10.1 der Kurbelwelle vorgeschliffen, so dass ein runder sauber geschliffener Lünettensitz angeschliffen ist. Im weiteren Ablauf werden dann die weiteren Lünettensitze nacheinander oder auch zeitparallel geschliffen, bis die Kurbelwelle 10 mit angestellten Lünetten 11 an den Hauptlagern 10.1 stabil über ihre Länge abgestützt ist. Im weiteren Schleifablauf werden dann die Hublager 10.2 und die Hauptlager 10.1 vorgeschliffen, so dass alle Lagerstellen an ihren Durchmessern, Radiusübergängen und Planseiten vorgeschliffen sind. Nach dem Vorschleifen erfolgt das Fertigschleifen der Hublager, der Hauptlager und der Wellenenden auf Fertigmaß. Das Vor- und Fertigschleifen erfolgt vorzugsweise mit ein und derselben Schleifscheibe 7, 9. Bei dem Komplettschleifen der Kurbelwelle 10 werden die zuvor beschriebenen Verfahren derartig zum Einsatz gebracht, wie es für das Schleifen der entsprechenden Kurbelwellen technologisch vorteilhaft und sinnvoll ist, wobei die Reihenfolge des Schleifens von der jeweiligen Kurbelwelle abhängig ist und durchaus variiert werden kann. Generell kann bei Großkurbelwellen eine definierte Schleifabfolge nicht fest definiert und vorgegeben werden, da die Technologie des Schleifens von der Verarbeitung und dem Verhalten beim Schleifen in Bezug auf frei werdende Spannungen und damit in Verbindung mit einem möglichen Verzug der Kurbelwelle stark abhängig ist. Als weiterer Einfluss für die Festlegung der Schleifabfolge ist der Werkstoff anzusehen, aus dem die Kurbelwelle besteht. Selbst identisch vorbearbeitete Kurbelwellen, die aus unterschiedlichen Werkstoffen bestehen oder eine voneinander abweichende Härtebehandlung erfahren haben, müssen unter Berücksichtigung auch dieser Eigenschaften teilweise anders hinsichtlich des Schleifablaufes bearbeitet werden. Eine weitere Einflussgröße dafür ist die Eigenfrequenz der Kurbelwelle, welche ebenfalls definierte Schleifabfolgen zur Folge haben bzw. erfordern kann.

Figur 4 stellt eine vergrößerte Darstellung der Figur 2 dar, wobei die Kurbelwelle 10 nur teilweise gezeigt ist. In Ergänzung zu Figur 2 sind hier in vergrößerter Darstellung die Spannfutter 17 des Werkstückspindelstockes 3 mit ihren Spannbacken 17.1 und der Zentrierspitze 26 sowie das Spannfutter 18 des Reitstockes 4 mit seinen Spannbacken 18.1 und der Zentrierspitze 27 dargestellt. Die Zentrierspitzen 26, 27 sind mitangetrieben ausgebildet, so dass bei zurückgezogenen Spannbacken 17.1, die Kurbelwelle immer noch zentriert über die Zentrierspitzen 26, 27 gehalten und aufgespannt ist. Es sind zwei Lünetten 11 gezeigt.

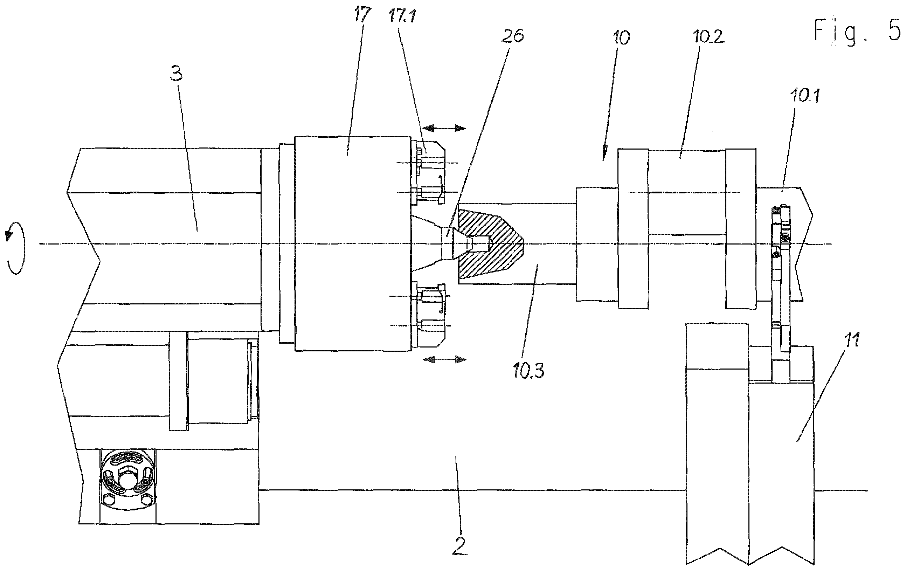

In Figur 5 ist das werkstückspindelstockseitige Spannfutter 17 mit geöffneten Spannbacken 17.1 gezeigt, welche zurückgezogen sind. Das Zurückziehen ist durch den jeweils oben und unten angegebenen Doppelpfeil angedeutet. Das Spannfutter 17 weist darüber hinaus die Zentrierspitze 26 auf, welche bei zurückgezogenen Spannbacken die Kurbelwelle 10 an deren Zapfen 10.3 weiterhin zentrisch abstützt bzw. aufspannt. Eine Lünette 11 stützt das von links gesehen erste Hauptlager 10.1 nach dem ersten Hublager 10.2 der Kurbelwelle 10 ab, wobei die Lünette 11 auf einer Halterung angeordnet ist, welche sich auf dem Schleiftisch 2 befestigt ist.

Bei der dargestellten zurückgezogenen Position der Spannbacken 17.1 können die Zapfen 10.3 der Endbereiche der Kurbelwelle 10 sowie eventuell vorhandene Planseiten geschliffen werden. Die Kurbelwelle 10 bleibt beim Schleifen des linken Endbereiches weiterhin im Spannfutter 18 am Reitstock 4 (nicht dargestellt) eingespannt, so dass zusätzlich zu der angetriebenen Zentrierspitzte 26, welche die C1-Achse realisiert, die C2-Achse des Reitstockes 4 die Kurbelwelle 10 rotatorisch zum Schleifen antreibt. Es ist natürlich auch möglich, die Werkstückspindel während des Schleifens des Zapfens 10.3 nicht mitanzutreiben, so dass dann eine stehende Spitze vorliegt. Dies hängt von der jeweiligen Schleifaufgabe und jeweiligen Gestaltung der zu schleifenden Kurbelwelle ab.

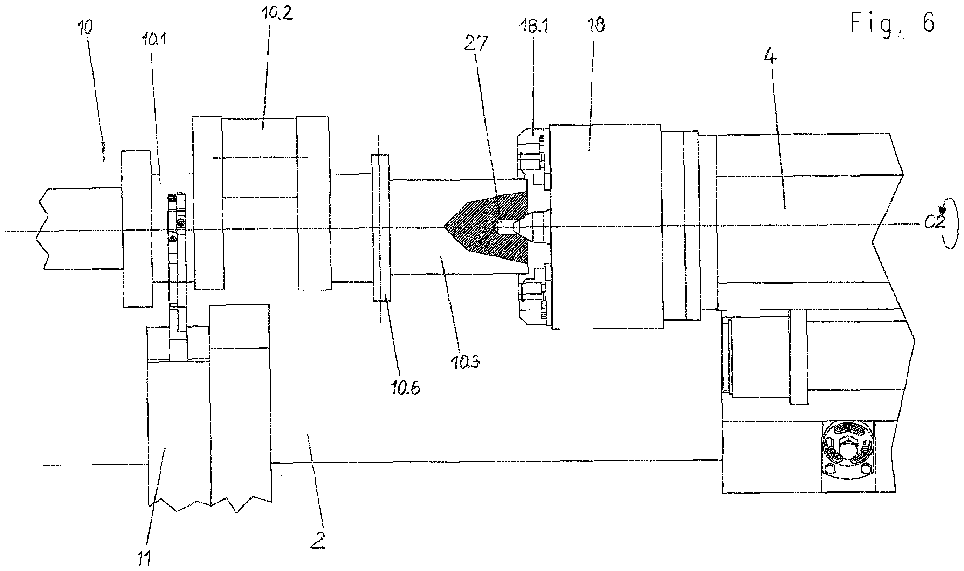

In Figur 6 ist in gegenüber Figur 4 vergrößerter Darstellung die Anordnung des Reitstockes 4 mit seinem Antrieb C2 im eingespannten Zustand des rechten Zapfens 10.3 der Kurbelwelle 10 dargestellt. Die Darstellung entspricht prinzipiell hinsichtlich der Anordnung der gemäß Figur 5 für den Werkstückspindelstock 3, mit der Ausnahme, dass das Spannfutter 18 mit seinen Spannbacken 18.1 und die Zentrierspitze 27 des Reitstockes 4 im spannenden Eingriff an dem Zapfen 10.3 angreift.

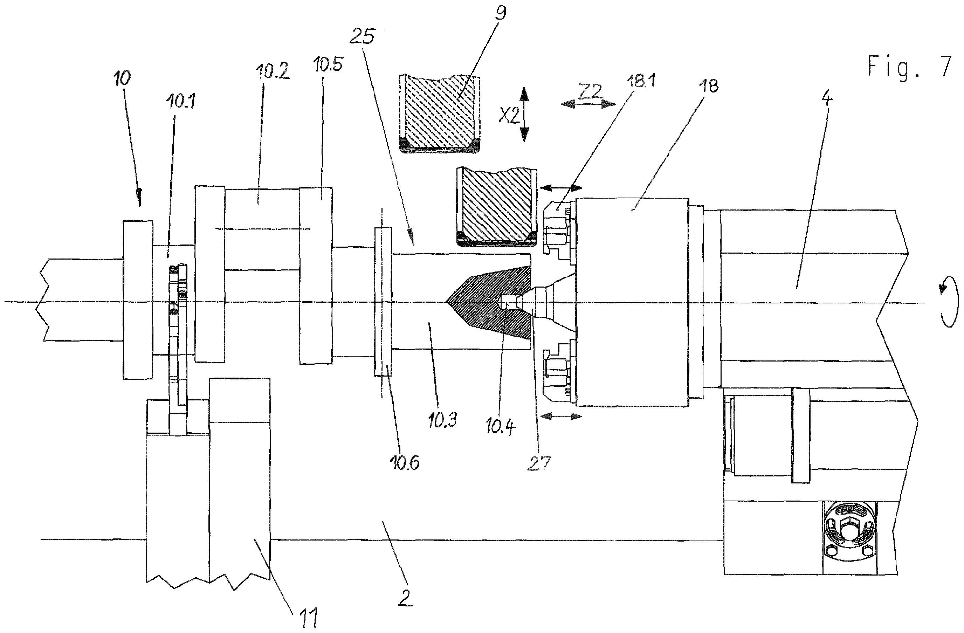

In Figur 7 ist dargestellt, wie der zylindrische Endbereich in Form des Zapfens 10.3 hinsichtlich des Schleifbereiches 25 mit der Schleifscheibe 9 geschliffen werden kann. Das Spannfutter 18 des Reitstockes 4 ist dabei hinsichtlich der Spannbacken 18.1 zurückgezogen, was durch den oberhalb und unterhalb des Spannfutters 18 angegebenen Doppelpfeil gekennzeichnet ist. Die Zentrierspitze 27 des Spannfutters 18 ist nach wie vor mit der Zentrierbohrung 10.4 in der Stirnseite des Zapfens 10.3 der Kurbelwelle 10 im Eingriff. Bei zurückgezogenen Spannbacken 18.1 ist der zylindrische Endbereich in Form des Zapfens der Kurbelwelle 10 im Schleifbereich 25 mittels der Schleifscheibe 9 schleifbar, sodass dieser Bereich der Kurbelwelle hinsichtlich des Durchmessers und gegebenenfalls auch an der vorhandenen Planseite des Flansches 10.6 geschliffen werden kann. Das Schleifen des Zapfens 10.3 kann im Mehrfach-Einstechschleifen geschliffen werden. Nach dem zweiten Einstechen mit der Schleifscheibe 9 wird diese über die komplette Länge des Zapfens "verzogen", sodass ein komplett zylindrischer Durchmesser am Fertigteil entsteht. Nicht dargestellt ist die linke Seite der Kurbelwelle 10 mit dem dort angeordneten Werkstückspindelstock 3, dessen Spannfutter 17 die Kurbelwelle 10 weiterhin eingespannt hält, sodass der C1-Achsenantrieb des Werkstückspindelstockes 3 die Kurbelwelle 10 rotatorisch zum Schleifen antreibt. Zweckmäßigerweise ist die Zentrierspitze 27 am Reitstock 4 während dieser Bearbeitung ebenfalls angetrieben, sodass reitstockseitig eine mitlaufende Spitze vorhanden ist. Es ist aber ebenfalls möglich, dass die Reitstockspindel nicht angetrieben wird während dieses Teils des Schleifens, sodass eine stehende oder einfach sich mitdrehende Spitze vorliegt.

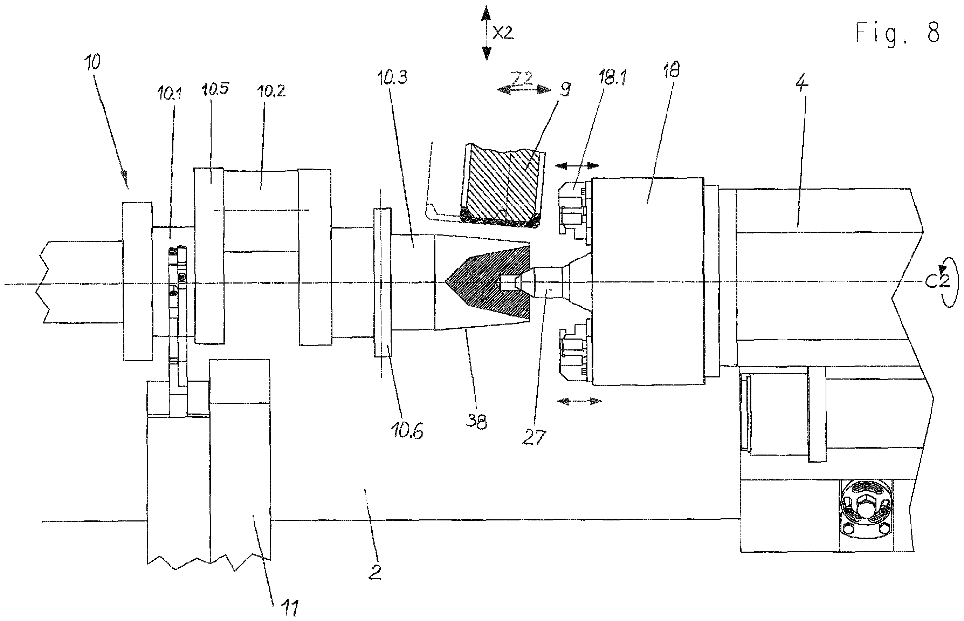

In Figur 8 ist eine der Figur 7 entsprechende Darstellung gezeigt, allerdings mit dem Unterschied, dass am Ende der Kurbelwelle 10 kein zylindrischer Abschnitt, sondern ein zylindrischer Abschnitt mit einem daran befindlichen endseitigen Konus 38 geschliffen werden. Das Einschwenken der Schleifscheibe 9 erfolgt dabei über die WK-Schwenkachse, im vorliegenden Fall über die WK2-Schwenkachse 16.2. Beim Schleifen des Konus 38 wird die Schleifscheibe 9 entlang der Mantellinie des Konus 38 verfahren, d. h. die X2- und Z2-Achse werden interpolierend angesteuert, sodass die Schleifscheibe 9 entsprechend einer Überlagerung einer Bewegung der X-Achse und der Z-Achse verfahren wird.

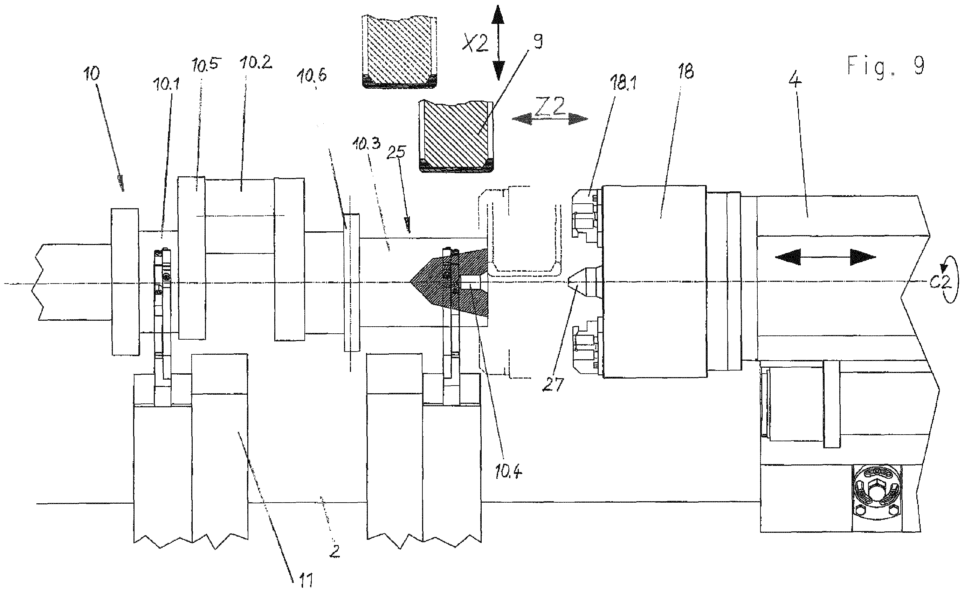

In Figur 9 ist ein weiteres Ausführungsbeispiel dargestellt, wie die Komplettbearbeitung einer Großkurbelwelle auch an den Stirnseiten ihrer endseitigen zylindrischen Zapfen 10.3 geschliffen werden kann. Die prinzipielle Anordnung entspricht der in Figur 7 gezeigten, wobei der Reitstock 4 mit seinem Spannfutter 18 mit den Spannbacken 18.1 und der Zentrierspitze 27 insgesamt aus einem Eingriff mit der Kurbelwelle 10 zurückgefahren ist, was durch den starken Doppelpfeil am Reitstock 4 gekennzeichnet ist. Damit - wie in Figur 9 dargestellt - die Schleifscheibe 9 die Stirnseite des Zapfens 10.3 schleifen kann, muss der Reitstock 4 so weit zurückgefahren werden, dass ein hinreichend großer Abstand zwischen dem Spannfutter 18 und der die Zentrierbohrung 10.4 aufweisenden Stirnseite des Zapfens 10.3 der Kurbelwelle 10 ermöglicht ist. Zum Schleifen dieser Stirnseite wird eine zusätzliche Lünette 11 angestellt, welche am Zapfen 10.3 angestellt ist, sodass der Zapfen 10.3 an der Kurbelwelle 10 ohne Abweichung von der Mittellinie geschliffen werden kann. Die Schleifscheibe 9 wird beim Planschleifen dabei von dem Außenumfang des Zapfens 10.3 bis zur Mittellängsachse der Kurbelwelle längs ihrer X2-Achse verfahren. Die Größe des Schleifabtrags wird über die Verstellung der Schleifscheibe 9 über ihre Z2-Achse realisiert. Bei der gemäß Figur 9 dargestellten Arbeitsweise ist es somit möglich, dass die Komplettbearbeitung der Kurbelwelle 10 auch die Stirnseiten der Endzapfen 10.3 der Kurbelwelle mitumfasst. Am Werkstückspindelstock 3 bleibt das Spannfutter 17 sowohl hinsichtlich der Spannbacken 17.1 als auch der Zentrierspitze 26 im Eingriff mit dem linksseitigen Zapfen, sodass der C1-Achsenantrieb des Werkstückspindelstocks 3 die Kurbelwelle 10 rotatorisch zum Schleifen antreibt.

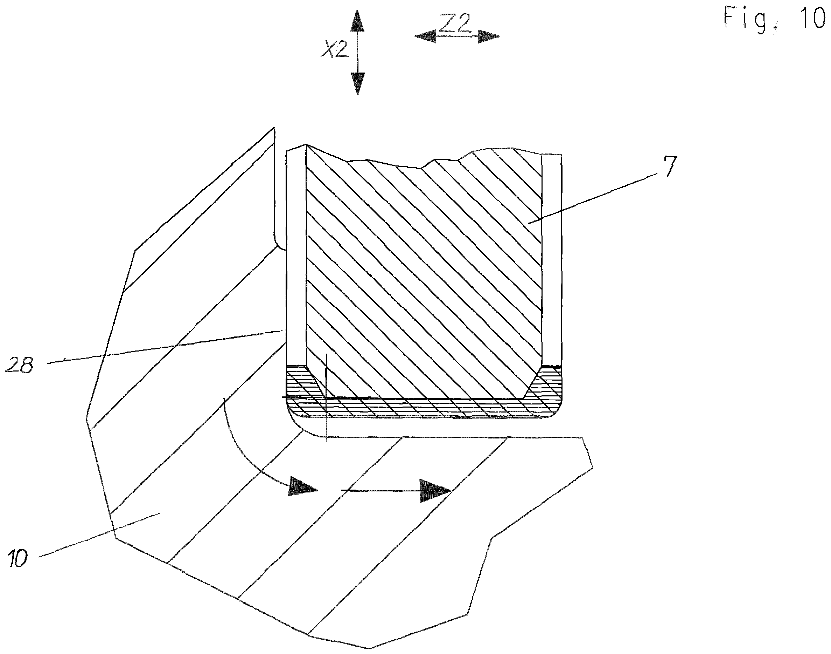

In Figur 10 ist schematisch dargestellt, wie an einer Lagerstelle ein Übergangsradius von der eigentlichen Lagerstelle durch Interpolation der Bewegungen, d. h. der Antriebe der X- und Z-Achse beim Schleifen mittels der Schleifscheibe 7, 9 "auskopiert" wird. Die Bewegung der Schleifscheibe 7, 9 entlang des zu schleifenden Übergangsradiusses wird durch die beiden Pfeile im Bereich unter der Schleifscheibe 7, 9 angegeben. Durch dieses Verfahren ist es möglich, dass mit ein und derselben CBN-Schleifscheibe Lagerstellen mit unterschiedlichen "Eckenradien" geschliffen werden können.

Mit ein und derselben Schleifscheibe 7, 9 kann auch die die eigentliche Lagerstelle begrenzende Planseite 28 geschliffen werden. Dabei kann es des Weiteren erforderlich sein, dass im Falle des Schleifens einer Planseite 28, welche senkrecht zur Längsachse der Lagerstelle und damit der Kurbelwelle 10 ausgerichtet ist, die Schleifscheibe 7, 9 um ihre WK-Schwenkachse 16.1 bzw. 16.2 leicht eingeschwenkt wird, sodass die Planseite 28 zuverlässig in jedem gewünschten Winkel zur Längsachse des Lagers geschliffen werden kann.

Dieses Verfahren bzw. die Schleifmaschine zur Realisierung des Verfahrens lässt sich auch bei entsprechend konturierten Durchmesserübergängen an den Endbereichen der Kurbelwelle anwenden.

In Figur 11 ist gezeigt, wie mit der zusätzlichen Bewegung um die WK1- bzw. WK2-Achse der Schleifscheibe 7, 9 beispielsweise eine ballige Kontur an einer Lagerstelle erzeugt werden kann, ohne dass die Schleifscheibe an ihrer Mantelfläche konkav abgerichtet sein muss. Der Vorteil der zusätzlichen Antriebe für die WK1- und WK2-Schwenkachse besteht vor allen Dingen auch darin, dass mit einer zylindrischen Ausbildung der äußeren Mantelfläche der Schleifscheibe, man spricht auch von einer "ebenen" Mantelfläche, durch beispielsweise periodisches Verschwenken der Schleifscheibe 7, 9 um ihre jeweilige WK-Achse eine ballige Form erzeugt werden kann. Dies vereinfacht den Abrichtvorgang, und dies erhöht auch die Flexibilität des Einsatzes der erfindungsgemäßen Schleifmaschine für jegliche an den Lagerstellen oder an den Endbereichen gewünschten Konturen, entweder abweichend von einer zylindrischen Kontur oder korrigierend zur Erzielung einer zylindrischen Kontur hoher Zylindrizität. Mit einer derartigen Anordnung ist es möglich, mit derselben Schleifscheibe unterschiedliche Balligkeiten an den Lagerstellen der Hublager 10.2 oder der Hauptlager 10.1 zu schleifen.

Im linken Teil von Figur 11 ist das senkrechte Zuführen der Schleifscheibe 7, 9 längs ihrer X1-bzw. X2-Achse dargestellt, und zwar im Wege des sogenannten Einstechschleifens. Bei Großkurbelwellen ist, wie auch in Figur 11 geringfügig angedeutet, die Breite der Schleifscheibe 7, 9 geringer als die Länge des Lagers zwischen den dieses Lager begrenzenden seitlichen Planflächen. Häufig wird eine rein zylindrische Lagerfläche daher so geschliffen, dass zunächst beim Vorschleifen in mehreren nebeneinander liegenden Einstechschleifvorgängen eine Vorschleifkontur erzielt wird. Das nach dem Vorschleifen verbleibende geringe Aufmaß zum Fertigschleifen wird dann durch seitliches Verziehen, was auch ein Glätten der Oberfläche beinhaltet, über die Länge des Lagers abgetragen.

Wenn die Breite der Schleifscheibe 7, 9 geringer ist als die Länge der Lagerstelle, ist es möglich, mit dem erfindungsgemäßen Verfahren und der erfindungsgemäßen Schleifmaschine eine Schwenkbewegung um die WK1- bzw. WK2-Achse zu realisieren, sodass - wie im rechten Teil der Figur gezeigt - eine Lagerstelle mit balliger Kontur erzeugt wird. Wenn die Schleifscheibe um ihre WK1- bzw. WK2-Achse nach rechts geschwenkt wird, ist die gestrichelt eingezeichnete Kontur die maximale Kontur, bis zu welcher die Schleifscheibe 7, 9 geschwenkt werden kann, ohne an die zuvor geschliffenen Planseiten anzutreffen. Bei der Herstellung von balligen Lagerstellen ist durch das erforderliche Schwenken der Schleifscheibe um die WK-Achse eine gegebenenfalls vorhandene leichte Verzerrung beim Übergangsradius von der eigentlichen Lagerstelle zur Planseite zu erwarten, wobei diese Verzerrung aber im zulässigen Toleranzbereich liegt, da die Balligkeit der Lagerstellenkontur ohnehin nur im Mikrometerbereich ausgebildet wird.

Der Vorteil der nichtprofilierten Schleifscheibe besteht eben gerade auch darin, dass die sogenannte ebene Mantelfläche der Schleifscheibe 7, 9 sowohl zum Erzeugen einer balligen Struktur einer Lagerfläche als auch von zylindrischen Lagerstellen oder zylindrischen Zapfen an den Wellenenden der Kurbelwelle problemlos eingesetzt werden kann.

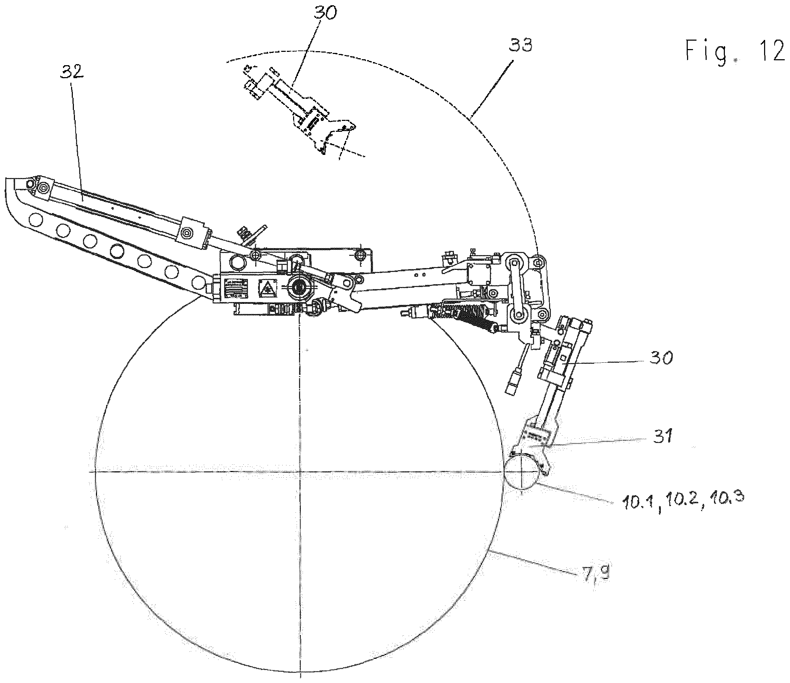

In Figur 12 ist eine Messvorrichtung 30 dargestellt, die auf dem Schleifspindelstock 5, 8 einschwenkbar angeordnet ist. Die Messvorrichtung 30 wird über eine Schwenkkurve 33 mittels Hydraulikzylinder 32 zum Zwecke des Be-/Entladens der Kurbelwelle 10 aus der Schleifmaschine in einefreie Position außerhalb der Schleifscheibe ausgeschwenkt. Die Schwenkkurve 33 ist als gestrichelte Linie dargestellt. Die Messvorrichtung 30 ist sowohl für Hauptlager 10.1 wie auch für Hublager 10.2 einsetzbar und weist an ihrem vorderen Ende ein Messprisma 31 auf, welches an eine Lagerstelle 10.1/10.2 anschwenkbar ist. Dadurch, dass die Messvorrichtung 30 seitlich an eine jeweilige Lagerstelle 10.1 bzw. 10.2 geschwenkt werden kann, kann eine Messung des entsprechenden Durchmessers an der Lagerstelle während des Schleifens mit der Schleifscheibe 7, 9 durchgeführt werden. Da bei Großkurbelwellen die Breite der Schleifscheibe 7, 9 kleiner ist als die Länge der jeweiligen Lagerstelle muss die Schleifscheibe zum Zwecke des Schleifens auch in unterschiedliche Schleifpositionen in ihrer Z-Richtung gebracht werden. Um eine hohe Genauigkeit der zu schleifenden Lagerstelle zu erhalten, welche auch das Vermessen einer von einer zylindrischen Außenkontur abweichenden Kontur mit einschließen soll, ist erfindungsgemäß vorgesehen, dass die Messvorrichtung 30 mittels einer zusätzlichen eigenen CNC-gesteuerten Achse in einer Richtung bewegbar und an mehrere unterschiedliche Orte an eine Lagerstelle anstellbar ist, welche parallel zur Längsachse der Kurbelwelle verläuft. Mit der vorhandenen Messvorrichtung kann auch eine Post-Prozess-Messung an den Lagerstellen vorgenommen werden.

Wenn mit der Schleifscheibe 7, 9 nicht geschliffen wird, wie beispielsweise beim Be- oder Entladen, ist die Messvorrichtung aus dem Arbeitsbereich der Schleifscheibe 7, 9 ausgeschwenkt. Die Kurbelwelle 10 bleibt bei der Vermessung immer in der Maschine eingespannt.

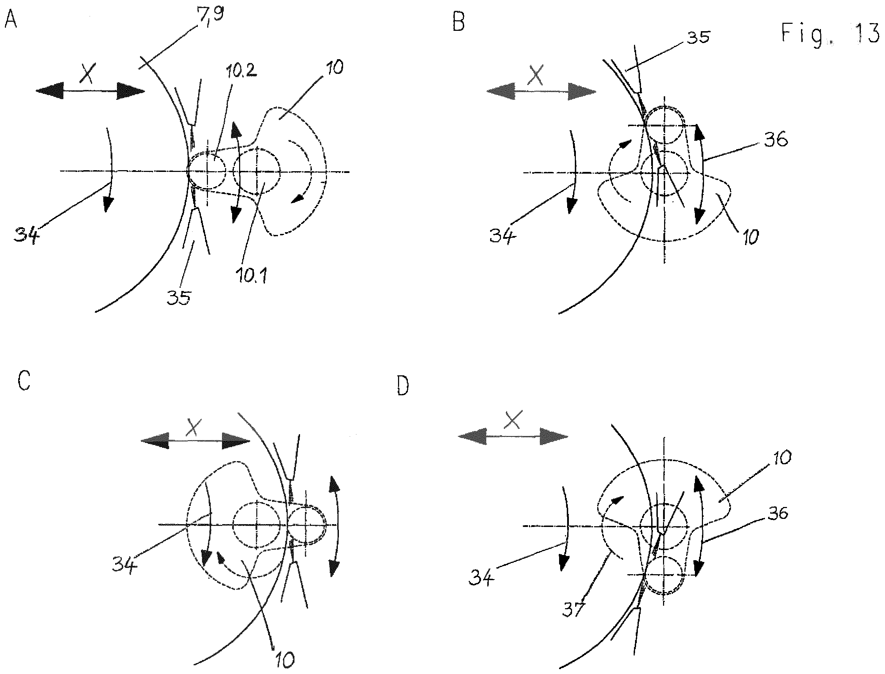

In Figur 13 ist gemäß einem weiteren Ausführungsbeispiel dargestellt, wie Kühldüsen 35 so beim Schleifen des exzentrisch umlaufenden Hublagers mitgeführt werden, dass deren Abstand zur Schleifscheibeneingriffsstelle etwa gleich bleibt. In Figur 13A ist gezeigt, wie die Schleifscheibe 7, 9 entlang ihrer Drehrichtung 34 und entlang ihrer Zustellrichtung X in Eingriff mit einem Hublagerzapfen 10.2 gebracht ist. Die Rotation der Kurbelwelle 10 ist durch den im rechten Teil der Teilzeichnung A angegebenen gestrichelten Pfeil gezeigt. Der durchgezogene gekrümmte Doppelpfeil 36 zeigt die Bewegung einer Kühldüse 35 mit eigener CNC-Bewegungsachse. Die Hauptlager 10.1 werden hier nicht geschliffen. Figur 13B zeigt, wie die Kurbelwelle 10 gegenüber Figur 13A um 90° gedreht ist, wobei die Schleifscheibe 7, 9 durch ihre Bewegung entlang der X-Achse dem Hubzapfen 10.2 folgt. Gleichermaßen mitgeführt durch eine Bewegung entlang der CNC-Kühldüsenachse sind die Kühldüsen 35. In Figur 13C ist die Bewegung des Hubzapfens 10.2 um 180° gegenüber Figur 13A gedreht gezeichnet, wobei auch hier ersichtlich ist, dass die Kühldüsen 35 nahezu den gleichgroßen Abstand zur unmittelbaren Schleifeingriffsstelle der Schleifscheibe 7, 9 am Hubzapfen 10.2 aufweisen. Und schließlich ist in Figur 13D der Fall gezeigt, bei welchem die Kurbelwelle um 270° gegenüber dem Ausgangspunkt gemäß Figur 13A gedreht ist, wobei gleichermaßen die Kühldüsen 35 mitgeführt sind und einen etwa gleichgroßen Abstand zur Schleifeingriffsstelle aufweisen. Die Schleifscheibe 7, 9 führt diese Schleifbewegung im sogenannten Pendelhubschleifen aus, wobei die über die CNC- Kühldüsenachse mitgeführten Kühldüsen 35 ein zuverlässiges und optimales Kühlen der Schleifeingriffsstelle der Schleifscheibe 7, 9 an dem zu schleifenden Hubzapfen 10.2 gewährleisten.

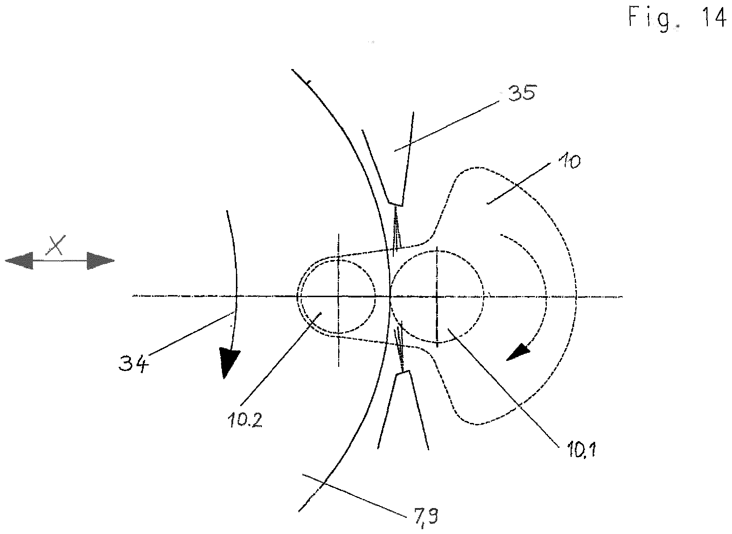

Wenn, wie es in Figur 14 gezeigt ist, ein Hauptlager 10.1 einer Kurbelwelle 10 geschliffen wird, ist es selbstverständlich nicht erforderlich, die CNC- Kühldüsenachse zu aktivieren. Vielmehr können die Kühldüsen 35 feststehend angeordnet werden, sodass bei der entsprechenden Rotation der Kurbelwelle 10 die Kühldüsen 35 dennoch einen konstanten Abstand zur Schleifeingriffsstelle der Schleifscheibe 7, 9 am Hauptlagerzapfen 10.1 haben. Ebenso sind die Drehrichtung 34 der Schleifscheibe sowie ihre Zustellung entlang der X-Achse eingezeichnet.

Mit der erfindungsgemäßen Schleifmaschine ist somit eine hohe Flexibilität bei der schleiftechnischen Bearbeitung von Großkurbelwellen unterschiedlichster Gestaltung, unterschiedlichsten Materials und unterschiedlichster Anforderungen möglich, und zwar bei Einhaltung einer hohen Bearbeitungsqualität.

### Bezugszeichenliste:

- 1: Maschinenbett
- 2: Schleiftisch
- 3: erster Werkstückspindelstock mit C1-Achse
- 4: Reitstock / zweiter Werkstückspindelstock mit C2-Achse
- 5: erster Schleifspindelstock
- 6: Schleifspindel
- 7: erste Schleifscheibe
- 8: zweiter Schleifspindelstock
- 8.1: Schleifspindel
- 9: zweite Schleifscheibe
- 10: Kurbelwelle
- 10.1: Hauptlager
- 10.2: Hublager
- 10.3: Endzapfen
- 10.4: Zentrierbohrung
- 10.5: Wange
- 10.6: Flansch
- 11: Lünette
- 12: Antrieb C1-Achse
- 13: Antrieb C2-Achse
- 14: Antrieb Z1-Achse
- 15: Antrieb Z2-Achse
- 16.1: WK1-Schwenkachse
- 16.2: WK2-Schwenkachse
- 17: Spannfutter Werkstückspindelstock
- 17.1: Spannbacken
- 18: Spannfutter Reitstock
- 18.1: Spannbacken
- 19: Längenmessvorrichtung
- 20: Abrichtvorrichtung
- 21: Führung Z-Achse
- 22: Führung X-Achse
- 23: Schleifbereich Hauptlager
- 24: Schleifbereich Hublager
- 25: Schleifbereich Endzapfen
- 26: Zentrierspitze Werkstückspindelstock
- 27: Zentrierspitze Reitspindelstock
- 28: Planseite Haupt-/Hublager
- 29: ballige Kontur Lagerstelle
- 30: Messvorrichtung
- 31: Messprisma
- 32: Hydraulikzylinder
- 33: Schwenkkurve
- 34: Drehrichtung Schleifscheibe
- 35: Kühldüse
- 36: Bewegung Kühldüse
- 37: Drehrichtung Kurbelwelle
- 38: Konus

## Patentansprüche

1. Verfahren zum Komplettschleifen von Groß-Kurbelwellen von LKW-, Schiffs- oder Stationärmotoren, bei welchem
a) zumindest Haupt- und Hublager (10.1, 10.2) der Kurbelwelle (10) mit zumindest einer ersten CBN-Schleifscheibe (7) vor- und fertiggeschliffen werden;
b) das Vor- und Fertigschleifen in einer einzigen Aufspannung der Kurbelwelle (10) erfolgt;
c) Hauptlager (10.1) der Kurbelwelle (10) einschließlich Lünettensitze vorgeschliffen werden;
d) jeweils eine Lünette (11) an die geschliffenen Lünettensitze angestellt wird;
e) die Kurbelwelle (10) an beiden Einspannenden mittels synchron zueinander arbeitender elektrischer Antriebe C1 (12) und C2 (13) angetrieben wird;
**dadurch gekennzeichnet, dass**
f) zumindest die beiden Endbereiche der Kurbelwelle (10) vor- und fertiggeschliffen werden;
g) eine gewünschte Form der Mantelfläche der Hub (10.2)- und/oder Hauptlager (10.1) durch interpolierendes Bewegen der ersten Schleifscheibe (7) mit jeweils CNC-gesteuerten, eine Zustellung der ersten Schleifscheibe senkrecht zur Längsachse des Haupt- oder Hublagers bewirkende X1-, eine Bewegung der ersten Schleifscheibe parallel zur Längsachse des Haupt- oder Hublagers bewirkenden Z1- und eine durch die Schleifscheibe und den Eingriffspunkt der Schleifscheibe zur Kurbelwellen-Längsachse verlaufende Schwenkachse der ersten Schleifscheibe darstellende WK1-Achsen (16.1) erzeugt wird, wobei die erste Schleifscheibe (7) eine Breite aufweist, welche geringer ist als die axiale Länge der Haupt- (10.1) und Hublager (10.2) der Kurbelwelle (10);
h) mindestens zwei aktuelle Durchmesser an voneinander längs der axialen Länge der Haupt- (10.1) und/oder Hublager (10.2) beabstandeten Messorten in einem Messvorgang gemessen und auf Basis der Messergebnisse die X1-, Z1- und WK1-Achsen (16.1) der ersten Schleifscheibe (7) zur Erzielung einer gewünschten Sollkontur der Mantelfläche der Haupt- und/oder der Hublager der Kurbelwelle (10) gesteuert werden.

2. Verfahren nach Anspruch 1, bei welchem die X1-, Z1- und WK1-Achsen (16.1) zumindest der ersten Schleifscheibe (7) so gesteuert werden, dass eine zylindrische Form der Haupt-(10.1) und/oder Hublager (10.2) erzeugt wird.

3. Verfahren nach Anspruch 1, bei welchem die X1-, Z1- und WK1-Achsen (16.1) zumindest der ersten Schleifscheibe (7) so gesteuert werden, dass eine von der zylindrischen Form der Haupt- (10.1) und/oder Hublager (10.2) abweichende gewünschte Form erzeugt wird.

4. Verfahren nach Anspruch 1 bis 3, bei welchem Längenmaße der Kurbelwelle (10) gemessen und zur Steuerung der Schleifposition zumindest der ersten Schleifscheibe (7) an deren CNC-Steuerung für die X1- und Z1-Achse übermittelt werden.

5. Verfahren nach einem der Ansprüche 1 bis 4, bei welchem beim Schleifen eines Endbereiches der Kurbelwelle (10) ein Spannfutter (17) an einem Werkstückspindelstock (3) und einem Reitstock (4) oder einem zweiten Werkstückspindelstock (4) dieses Endbereiches gelöst wird und die Kurbelwelle (10) durch eine Spitze (27) des Spannfutters (18) zentrisch gehalten wird.

6. Verfahren nach einem der Ansprüche 1 bis 5, bei welchem beim Schleifen eines Endbereiches der Kurbelwelle (10) ein Spannfutter (17) an einem Werkstückspindelstock (3) und einem Reitstock oder einem zweiten Werkstückspindelstock (4) dieses Endbereiches gelöst wird und die Kurbelwelle (10) durch eine zusätzliche Lünette(11) gehalten wird.

7. Verfahren nach einem der Ansprüche 1 bis 6, bei welchem eine zweite CBN-Schleifscheibe (9) mittels ihrer CNC-gesteuerten X2- und Z2-Achsen-Antriebe (15) sowie eines zusätzlichen CNC-gesteuerten WK2-Schwenkachsen-Antriebs (16.2) das Vor- und Fertigschleifen der Kurbelwelle ausführt.

8. Verfahren nach einem der Ansprüche 1 bis 7, bei welchem mindestens vier Lünettensitze (11) geschliffen werden.

9. Verfahren nach einem der Ansprüche 1 bis 8, bei welchem zumindest ein Endbereich der Kurbelwelle (10) mit der ersten Schleifscheibe (7) geschliffen wird.

10. Verfahren nach einem der Ansprüche 7 bis 9, bei welchem zumindest ein Endbereich der Kurbelwelle (10) mit der zweiten Schleifscheibe (9) geschliffen wird.

11. Verfahren nach einem der Ansprüche 7 bis 10, bei welchem mittels der CBN-Schleifscheibe (7, 9) Radien der Mantelflächenkontur der Kurbelwelle (10) durch Abkopieren geschliffen werden.

12. Verfahren nach einem der Ansprüche 1 bis 11, bei welchem zumindest die erste Schleifscheibe (7) in definierten Intervallen zwischen der Schleifbearbeitung der Kurbelwelle (10) abgerichtet wird.

13. Schleifmaschine zum Komplettberarbeiten von Groß-Kurbelwellen von LKW-, Schiffs- oder Stationärmotoren, welche auf ihrem Maschinenbett (1) angeordnet aufweist:
a) einen ersten (3) und einen zweiten, jeweils auf einem Schleiftisch (2) angeordneten Werkstückspindelstock (4) mit je einem CNC-gesteuerten Drehantrieb C1 (12) und C2 (13), wobei zwischen den Werkstückspindelstöcken (3, 4) die zu schleifende Kurbelwelle (10) aufgespannt ist und die Drehantriebe C1 (12) und C2 (13) die Kurbelwelle (10) an ihren beiden Enden synchron zueinander rotatorisch antreiben;
b) einen ersten Schleifspindelstock (5) mit zumindest einer ersten CBN-Schleifscheibe (7) mit CNC-gesteuerten Antrieben (14) ihrer eine Zustellung der ersten Schleifscheibe senkrecht zur Längsachse des Haupt- oder Hublagers bewirkenden X1- und eine Bewegung der ersten Schleifscheibe parallel zur Längsachse des Haupt- oder Hublagers bewirkenden Z1-Achsen zum Vor- und Fertigschleifen zumindest von Haupt- (10.1) und Hublagern (10.2) der Kurbelwelle (10),
c) Lünetten (11), welche auf jeweiligen Lagerungen angeordnet und an ein jeweiliges Kurbelwellen-Hauptlager (10.1) bei welchem mit der ersten Schleifscheibe (7) ein Lünettensitz geschliffen worden ist; dieses kontaktierend anstellbar sind,
d) eine Messeinrichtung (30), welche zumindest auf einem der Schleifspindelstöcke (5, 8) angeordnet ist und eine Verstellachse aufweist, welche parallel zur Längsachse der Haupt- (10.1) oder Hublager (10.2) verläuft und entlang welcher die Messeinrichtung (30) in Messpositionen bringbar ist, an welchen aktuelle Durchmesser durch die Messeinrichtung (30) aufnehmbar sind,
**dadurch gekennzeichnet**,
e) dass die erste Schleifscheibe (7) einen weiteren CNC-gesteuerten Antrieb (16.1) für eine durch die Schleifscheibe und den Eingriffspunkt der Schleifscheibe zur Kurbelwellen-Längsachse verlaufende Schwenkachse der ersten Schleifscheibe darstellende WK1-Schwenkachse aufweist und die X1-, Z1- und WK1-Achsen so interpolierbar zueinander und voneinander abhängig steuerbar sind, dass eine gewünschte Mantelflächenkontur zumindest der Haupt- und Hublager erzielbar ist; und
f) dass die Messeinrichtung (30) dazu konfiguriert ist, mindestens zwei aktuelle Durchmesser an voneinander längs der axialen Länge der Haupt- und/oder Hublager beabstandeten Messorten in einem Messvorgang zu messen und auf Basis dieser gemessenen aktuellen Durchmesser die X1-, Z1- und WK1-Achsen (16.1) der ersten Schleifscheibe (7) zur Erzielung einer gewünschten Sollkontur steuerbar sind.

14. Schleifmaschine nach Anspruch 13, bei welcher die Drehantriebe C1 (12) und C2 (13) als diese verbindende elektrische Welle ausgebildet sind.

15. Schleifmaschine nach Anspruch 13 oder 14, bei welcher die Werkstückspindelstöcke (3, 4), insbesondere hydraulisch, verfahrbar sind.

16. Schleifmaschine nach einem der Ansprüche 13 oder 15, bei welcher der zweite Schleifspindelstock (8) mit einer zweiten CBN-Schleifscheibe (9) mit CNC-gesteuerten X2- und Z2-Achsen (15) zum Vor- und Fertigschleifen vorgesehen ist.

17. Schleifmaschine nach einem der Ansprüche 13 bis 16, bei welcher auf dem Schleiftisch (2) eine Abrichtvorrichtung (20) mit einem Diamantabrichtrad angeordnet ist, mittels welcher die erste (7) und die zweite Schleifscheibe (9) auf ihre jeweilige Sollkontur abrichtbar sind.

18. Schleifmaschine nach einem der Ansprüche 13 bis 17, bei welcher am ersten (5) und/oder am zweiten Schleifspindelstock (8) eine Längenmessvorrichtung angeordnet ist, welche entlang der Z1- bzw. Z2-Achse in unterschiedliche Messpositionen verfahrbar und mittels welcher die erste (7) bzw. die zweite Schleifscheibe (9) an ihren Schleifort an der Kurbelwelle (10) steuerbar ist.

19. Schleifmaschine nach Anspruch 18, bei welcher die Längenmesseinrichtung einen Schaltmesskopf aufweist.

20. Schleifmaschine nach einem der Ansprüche 13 bis 19, bei welcher die zweite Schleifscheibe (9) einen zusätzlichen CNC-gesteuerten Antrieb (16.2) für eine WK2-Schwenkachse aufweist.

21. Schleifmaschine nach einem der Ansprüche 13 bis 20, bei welcher zumindest vier Lünetten (11) vorgesehen sind.

22. Schleifmaschine nach einem der Ansprüche 13 bis 21, bei welcher die Drehantriebe C1 (12) und C2 (13) während der Haupt- und Hublagerbearbeitung der Kurbelwelle (10) in ihrer die Kurbelwelle spannenden Stellung verbleiben.

23. Schleifmaschine nach einem der Ansprüche 13 bis 22, bei welcher Kühldüsen (35) mit einem zusätzlichen CNC-Antrieb zum Nachführen der Kühldüsen (35) zu der exzentrisch sich bewegenden Schleifstelle vorgesehen sind, welche beim Schleifen der Hublager (10.2) Kühlschmiermittel an die sich bei Rotation der Kurbelwelle (10) exzentrisch bewegende Schleifstelle bei im Wesentlichen äquidistanter Anordnung zuführen.

## Claims

1. Method for completely grinding large crankshafts of truck engines, ship engines or stationary engines, in which
a) at least main bearings and crank pin bearings (10.1, 10.2) of the crankshaft (10) are rough-ground and finish-ground with at least one first CBN grinding wheel (7);
b) the rough-grinding and finish-grinding take place in a single setup of the crankshaft (10);
c) main bearings (10.1) of the crankshaft (10) including steady rest seats are rough-ground;
d) one steady rest (11) is lined up with each of the ground steady rest seats;
e) the crankshaft (10) is driven at both clamping ends by means of electric drives C1 (12) and C2 (13) operating synchronously to each other;
**characterized in that**
f) at least the two end regions of the crankshaft (10) are rough-ground and finish-ground;
g) a desired shape of the lateral surface of the crank pin bearing (10.2) and/or main bearing (10.1) is produced by interpolating movement of the first grinding wheel (7) with the following axes, each CNC-controlled, an X1 axis bringing about an infeed of the first grinding wheel perpendicularly to the longitudinal axis of the main bearing or crank pin bearing, a Z1 axis bringing about a movement of the first grinding wheel parallel to the longitudinal axis of the main bearing or crank pin bearing, and a WK1 axis (16.1) constituting a pivot axis of the first grinding wheel, said pivot axis running through the grinding wheel and the engagement point of the grinding wheel with the longitudinal axis of the crankshaft, wherein the first grinding wheel (7) has a width which is smaller than the axial length of the main bearing (10.1) and crank pin bearing (10.2) of the crankshaft (10);
h) at least two current diameters of measurement locations spaced apart from each other along the axial length of the main bearings (10.1) and/or crank pin bearings (10.2) are measured in a measurement operation and the X1, Z1 and WK1 axes (16.1) of the first grinding wheel (7) are controlled on the basis of the measurement results in order to obtain a desired contour of the lateral surface of the main bearings and/or the crank pin bearings of the crankshaft (10).

2. Method according to Claim 1, in which the X1, Z1 and WK1 axes (16.1) at least of the first grinding wheel (7) are controlled in such a manner that a cylindrical shape of the main bearings (10.1) and/or crank pin bearings (10.2) is produced.

3. Method according to Claim 1, in which the X1, Z1 and WK1 axes (16.1) at least of the first grinding wheel (7) are controlled in such a manner that a desired shape differing from the cylindrical shape of the main bearings (10.1) and/or crank pin bearings (10.2) is produced.

4. Method according to Claims 1 to 3, in which length dimensions of the crankshaft (10) are measured and, in order to control the grinding position at least of the first grinding wheel (7), are transmitted to the CNC controller thereof for the X1 and Z1 axis.

5. Method according to one of Claims 1 to 4, in which, for the grinding of an end region of the crankshaft (10), a chuck (17) on a work headstock (3) and a footstock (4) or on a second work headstock (4) of said end region is released, and the crankshaft (10) is held centrally by a tip (27) of the chuck (18).

6. Method according to one of Claims 1 to 5, in which, for the grinding of an end region of the crankshaft (10), a chuck (17) on a work headstock (3) and a footstock or on a second work headstock (4) of said end region is released, and the crankshaft (10) is held by an additional steady rest (11).

7. Method according to one of Claims 1 to 6, in which a second CBN grinding wheel (9) executes the rough-grinding and finish-grinding of the crankshaft by means of its CNC-controlled X2 and Z2 axis drives (15) and an additional CNC-controlled WK2 pivot axis drive (16.2).

8. Method according to one of Claims 1 to 7, in which at least four steady rest seats (11) are ground.

9. Method according to one of Claims 1 to 8, in which at least one end region of the crankshaft (10) is ground with the first grinding wheel (7).

10. Method according to one of Claims 7 to 9, in which at least one end region of the crankshaft (10) is ground with the second grinding wheel (9).

11. Method according to one of Claims 7 to 10, in which radii of the lateral surface contour of the crankshaft (10) are ground by copying by means of the CBN grinding wheel (7, 9).

12. Method according to one of Claims 1 to 11, in which at least the first grinding wheel (7) is dressed at defined intervals between the grinding machining of the crankshaft (10).

13. Grinding machine for completely machining large crankshafts of truck engines, ship engines or stationary engines, which has the following arranged on its machine bed (1):
a) a first work headstock (3) and a second work headstock (4) which are each arranged on a grinding table (2) and have a respective CNC-controlled rotary drive C1 (12) and C2 (13), wherein the crankshaft (10) to be ground is clamped between the work headstocks (3, 4) and the rotary drives C1 (12) and C2 (13) drive the crankshaft (10) in a rotatory manner at both of its ends synchronously with respect to each other;
b) a first grinding headstock (5) with at least one first CBN grinding wheel (7) with CNC-controlled drives (14) of its X1 axis bringing about an infeed of the first grinding wheel perpendicularly to the longitudinal axis of the main bearing or crank pin bearing and Z1 axis bringing about a movement of the first grinding wheel parallel to the longitudinal axis of the main bearing or crank pin bearing, for the rough-grinding and finish-grinding at least of main bearings (10.1) and crank pin bearings (10.2) of the crankshaft (10),
c) steady rests (11) which are arranged on respective bearings and are movable up to a respective crankshaft main bearing (10.1) in a manner contacting the latter, and in which a steady rest seat has been ground with the first grinding wheel (7),
d) a measurement device (30) which is arranged at least on one of the grinding headstocks (5, 8) and has a displacement axis which runs parallel to the longitudinal axis of the main bearings (10.1) or crank pin bearings (10.2) and along which the measurement device (30) can be brought into measurement positions at which current diameters can be recorded by the measurement device (30),
cahracterized
e) in that the first grinding wheel (7) has a further CNC-controlled drive (16.1) for a WK1 pivot axis constituting a pivot axis of the first grinding wheel, said pivot axis running through the grinding wheel and the engagement point of the grinding wheel with the longitudinal axis of the crankshaft, and the X1, Z1 and WK1 axes can be interpolated with respect to one another and are controllable dependently on one another in such a manner that a desired lateral surface contour at least of the main bearings and crank pin bearings can be achieved; and
f) in that the measurement device (30) is configured to measure at least two current diameters of measurement locations spaced apart from each other along the axial length of the main bearings and/or crank pin bearings in a measurement operation and on the basis of these measured current dimensions, the X1, Z1 and WK1 axes (16.1) of the first grinding wheel (7) are controllable in order to achieve a desired contour.

14. Grinding machine according to Claim 13, in which the rotary drives C1 (12) and C2 (13) are designed as an electric shaft connecting said drives.

15. Grinding machine according to Claim 13 or 14, in which the work headstocks (3, 4) are movable, in particular hydraulically.

16. Grinding machine according to either of Claims 13 and 15, in which the second grinding headstock (8) is provided with a second CBN grinding wheel (9) and with CNC-controlled X2 and Z2 axes (15) for the rough-grinding and finish-grinding.

17. Grinding machine according to one of Claims 13 to 16, in which a dressing device (20) having a diamond dressing wheel is arranged on the grinding table (2), by means of which dressing device the first grinding wheel (7) and the second grinding wheel (9) can be dressed to their respective desired contour.

18. Grinding machine according to one of Claims 13 to 17, in which a length measurement device is arranged on the first grinding headstock (5) and/or on the second grinding headstock (8), which length measurement device is movable into different measurement positions along the Z1 or Z2 axis and by means of which the first grinding wheel (7) or the second grinding wheel (9) is controllable at its grinding location on the crankshaft (10).

19. Grinding machine according to Claim 18, in which the length measurement device has a switching measurement head.

20. Grinding machine according to one of Claims 13 to 19, in which the second grinding wheel (9) has an additional CNC-controlled drive (16.2) for a WK2 pivot axis.

21. Grinding machine according to one of Claims 13 to 20, in which at least four steady rests (11) are provided.

22. Grinding machine according to one of Claims 13 to 21, in which the rotary drives C1 (12) and C2 (13) remain in their position clamping the crankshaft during the main bearing and crank pin bearing machining of the crankshaft (10).

23. Grinding machine according to one of Claims 13 to 22, in which cooling nozzles (35) are provided with an additional CNC drive for guiding the cooling nozzles (35) with respect to the eccentrically moving grinding location, said cooling nozzles, during the grinding of the crank pin bearings (10.2), supplying cooling lubricant in a substantially equidistant arrangement to the grinding location, which moves eccentrically during rotation of the crankshaft (10).

## Revendications

1. Procédé de finition de grands vilebrequins de moteurs de camion, de moteurs marins ou de moteurs stationnaires, dans lequel
a) au moins les paliers principaux et les paliers mobiles (10.1, 10.2) du vilebrequin (10) sont soumis à un premier meulage et à un meulage de finition avec au moins une première meule CBN (7);
b) le premier meulage et le meulage de finition sont effectués dans un seul montage du vilebrequin (10);
c) les paliers principaux (10.1) du vilebrequin (10) y compris les sièges de lunette sont soumis à un premier meulage;
d) une lunette (11) est approchée de chacun des sièges de lunette meulés;
e) le vilebrequin (10) est entraîné aux deux extrémités de serrage au moyen d'entraînements électriques C1 (12) et C2 (13) opérant en synchronisme l'un avec l'autre;
**caractérisé en ce que**
f) au moins les deux régions d'extrémité du vilebrequin (10) sont soumises au premier meulage et au meulage de finition;
g) on produit une forme désirée de la surface latérale des paliers mobiles (10.2) et/ou des paliers principaux (10.1) par interpolation de mouvements de la première meule (7) respectivement avec des axes (16.1) commandés par CNC, un axe X1 provoquant une approche de la première meule perpendiculairement à l'axe longitudinal du palier principal ou du palier mobile, un axe Z1 provoquant un mouvement de la première meule parallèlement à l'axe longitudinal du palier principal ou du palier mobile et un axe WK1 représentant un axe de pivotement de la première meule s'étendant à travers la meule et le point d'engagement de la meule vers l'axe longitudinal du vilebrequin, dans lequel la première meule (7) présente une largeur, qui est inférieure à la longueur axiale des paliers principaux (10.1) et des paliers mobiles (10.2) du vilebrequin (10);
h) on mesure au moins deux diamètres actuels en des points de mesure espacés l'un de l'autre le long de la longueur axiale des paliers principaux (10.1) et/ou des paliers mobiles (10.2) lors d'une opération de mesure et on commande les axes X1, Z1 et WK1 (16.1) de la première meule (7) sur la base des résultats de mesure pour produire un contour théorique désiré de la surface latérale des paliers principaux et/ou des paliers mobiles du vilebrequin (10).

2. Procédé selon la revendication 1, dans lequel on commande les axes X1, Z1 et WK1 (16.1) au moins de la première meule (7) de telle manière qu'une forme cylindrique des paliers principaux (10.1) et/ou des paliers mobiles (10.2) soit produite.

3. Procédé selon la revendication 1, dans lequel on commande les axes X1, Z1 et WK1 au moins de la première meule (7) de telle manière qu'une forme désirée s'écartant de la forme cylindrique des paliers principaux (10.1) et/ou des paliers mobiles (10.2) soit produite.

4. Procédé selon une revendication 1 à 3, dans lequel on mesure des dimensions en longueur du vilebrequin (10) et on les transmet à sa commande CNC pour les axes X1 et Z1 pour la commande de la position de meulage au moins de la première meule (7).

5. Procédé selon l'une quelconque des revendications 1 à 4, dans lequel lors du meulage d'une région d'extrémité du vilebrequin (10) on desserre un mandrin de serrage (17) à une poupée porte-pièce (3) et à une poupée mobile (4) ou à une autre poupée porte-pièce (4) de cette région d'extrémité et on maintient le vilebrequin (10) de façon centrée par une pointe (2) du mandrin de serrage (17).

6. Procédé selon l'une quelconque des revendications 1 à 5, dans lequel lors du meulage d'une région d'extrémité du vilebrequin (10) on desserre un mandrin de serrage (17) à une poupée porte-pièce (3) et à une poupée mobile ou à une autre poupée porte-pièce (4) de cette région d'extrémité et on maintient le vilebrequin (10) au moyen d'une lunette supplémentaire (11).

7. Procédé selon l'une quelconque des revendications 1 à 6, dans lequel une deuxième meule CBN (9) exécute le premier meulage et le meulage de finition du vilebrequin au moyen de ses entraînements d'axes X2 et Z2 à commande CNC (15) ainsi que d'un entraînement supplémentaire d'axe de pivotement WK2 à commande CNC (16.2).

8. Procédé selon l'une quelconque des revendications 1 à 7, dans lequel on meule au moins quatre sièges de lunette (11).

9. Procédé selon l'une quelconque des revendications 1 à 8, dans lequel on meule au moins une région d'extrémité du vilebrequin (10) avec la première meule (7).

10. Procédé selon l'une quelconque des revendications 7 à 9, dans lequel on meule au moins une région d'extrémité du vilebrequin (10) avec la deuxième meule (9).

11. Procédé selon l'une quelconque des revendications 7 à 10, dans lequel on meule des rayons du contour de la surface latérale du vilebrequin (10) par copie au moyen de la meule CBN (7, 9).

12. Procédé selon l'une quelconque des revendications 1 à 11, dans lequel on dresse au moins la première meule (7) à des intervalles définis entre le traitement de meulage du vilebrequin (10).

13. Rectifieuse pour l'usinage complet de grands vilebrequins de moteurs de camion, de moteurs marins ou de moteurs stationnaires, qui présente, disposés sur son banc de machine (1):
a) une première (3) et une deuxième (4) poupées porte-pièce, chacune disposée sur une table de meulage (2), avec chacune un entraînement rotatif C1 (12) et C2 (13) à commande CNC, dans lequel le vilebrequin à meuler (10) est serré entre les poupées porte-pièce (3, 4) et les entraînements rotatifs C1 (12) et C2 (13) entraînent le vilebrequin (10) en rotation à ses deux extrémités de façon synchrone l'une avec l'autre;
b) une première poupée porte-broche de meulage (5) avec au moins une première meule CBN (7) avec des entraînements à commande CNC (14) de ses axes X1 provoquant une approche de la première meule perpendiculairement à l'axe longitudinal du palier principal ou du palier mobile et Z1 provoquant un mouvement de la première meule (7) parallèlement à l'axe longitudinal du palier principal ou du palier mobile pour le premier meulage et le meulage de finition au moins de paliers principaux (10.1) et de paliers mobiles (10.2) du vilebrequin (10);
c) des lunettes (11), qui sont disposées sur des appuis respectifs et qui peuvent être approchées jusqu'au contact d'un palier principal du vilebrequin correspondant (10.1) dans lequel un siège de lunette a été meulé avec la première meule (7);
d) un dispositif de mesure (30), qui est disposé au moins sur une des poupées porte-broche de meulage (5, 8) et qui présente un axe de déplacement, qui s'étend parallèlement à l'axe longitudinal des paliers principaux (10.1) ou des paliers mobiles (10.2) et le long duquel le dispositif de mesure (30) peut être amené dans des positions de mesure, où des diamètres actuels peuvent être relevés par le dispositif de mesure (30),
**caractérisé en ce que**
e) la première meule (7) présente un autre entraînement à commande CNC (16.1) pour un axe de pivotement WK1 représentant un axe de pivotement de la première meule s'étendant à travers la meule et le point d'engagement de la meule vers l'axe longitudinal du vilebrequin et les axes X1, Z1 et WK1 peuvent être commandés de façon interpolée l'un par rapport à l'autre et de façon indépendante l'un de l'autre, de telle manière qu'un contour de surface latérale désiré au moins des paliers principaux et des paliers mobiles puisse être produit; et
f) le dispositif de mesure (30) est configuré pour mesurer au moins deux diamètres actuels en des points de mesure espacés le long de la longueur axiale des paliers principaux et/ou des paliers mobiles lors d'une opération de mesure et les axes X1, Z1 et WK1 (16.1) de la première meule (7) peuvent être commandés sur la base de ces diamètres actuels mesurés pour produire un contour théorique désiré.

14. Rectifieuse selon la revendication 13, dans laquelle les entraînements rotatifs C1 (12) et C2 (13) sont formés par un arbre électrique reliant ceux-ci.

15. Rectifieuse selon une revendication 13 ou 14, dans laquelle les poupées porte-pièce (3, 4) peuvent être déplacées, en particulier de façon hydraulique.

16. Rectifieuse selon une des revendications 13 ou 15, dans laquelle la deuxième poupée porte-broche de meulage (8) est prévue avec une deuxième meule CBN (9) avec des axes X2 et Z2 (15) à commande CNC pour le premier meulage et le meulage de finition.

17. Rectifieuse selon l'une quelconque des revendications 13 à 16, dans laquelle un dispositif de dressage (20) avec une roue dresseuse au diamant est disposé sur la table de meulage (2), au moyen duquel la première (7) et la deuxième (9) meules peuvent être dressées à leur contour théorique respectif.

18. Rectifieuse selon l'une quelconque des revendications 13 à 17, dans laquelle un dispositif de mesure de longueur est disposé sur la première (5) et/ou sur la deuxième (8) poupée porte-broche de meulage, qui est déplaçable dans différentes positions de mesure le long de l'axe Z1 ou Z2 et au moyen duquel la première (7) ou la deuxième (9) meule peut être commandée à son point de meulage sur le vilebrequin (10).

19. Rectifieuse selon la revendication 18, dans laquelle le dispositif de mesure de longueur présente une tête de mesure commutable.

20. Rectifieuse selon l'une quelconque des revendications 13 à 19, dans laquelle la deuxième meule (9) présente un entraînement à commande CNC supplémentaire (16.2) pour un axe de pivotement WK2.

21. Rectifieuse selon l'une quelconque des revendications 13 à 20, dans laquelle il est prévu au moins quatre lunettes (11).

22. Rectifieuse selon l'une quelconque des revendications 13 à 21, dans laquelle les entraînements rotatifs C1 (12) et C2 (13) restent dans leur position serrant le vilebrequin pendant l'usinage des paliers principaux et des paliers mobiles du vilebrequin (10).

23. Rectifieuse selon l'une quelconque des revendications 13 à 22, dans laquelle il est prévu des buses de refroidissement (35) avec un entraînement CNC supplémentaire pour asservir les buses de refroidissement (35) au point de meulage en mouvement excentrique, qui fournissent lors du meulage des paliers mobiles (10.2) un lubrifiant de refroidissement au point de meulage en mouvement excentrique lors de la rotation du vilebrequin (10) avec une disposition essentiellement équidistante.
